# EUROPEAN PATENT APPLICATION

(11) **EP 4 775 016 A2**
(43) Date of publication of application: **15.07.2026**
(21) Application number: 26173362.0
(22) Date of filing: 19.07.2023
(51) Int. Cl.: A01D 34/69

(54) **OUTDOOR POWER EQUIPMENT WITH CONVERTIBLE SEATED AND STANDING OPERATOR POSITIONS**

(30) Priority: 20.07.2022 US 202263390784 P; 17.10.2022 US 202263416764 P; 13.07.2023 US 202318351604
(62) Divisional of application: 23186459.6
(71) Applicant: MTD Products Inc., Valley City, OH 44280 (US)
(72) Inventor: WERSHING, Jesse J., Valley City, 44280 (US); MUSAT, Carl, Valley City, 44280 (US)
(74) Representative: SBD IPAdmin

(57) **Abstract**

An outdoor power equipment having sitting configuration and standing configuration is presented herein. The outdoor power equipment can be transformed from the sitting configuration to the standing configuration and vice versa, allowing an operator to use the outdoor power equipment in either a sitting position or standing position. Transformation of the outdoor power equipment can comprise transition of one or more components from associated sitting position(s) to associated standing position(s), such as operator controls, a rollover protection (ROP) bar, power equipment controls, seat back, etc.

## Description

### CROSS REFERENCE TO RELATED APPLICATIONS

This application claims the benefit of US Provisional Application No. 63/416,764 filed October 17, 2022, US Provisional Application No. 63/390,784 filed July 20, 2022 and US Non-Provisional Application No. 18/351,604, filed July 13, 2023, all of which are hereby incorporated by reference within the presented disclosure in their respective entireties and for all purposes. The following are hereby incorporated by reference within the present disclosure in their respective entireties and for all purposes: US Patent Application No. 16/782,409 filed Feb. 05, 2020, US Patent Application No. 17/693,727 filed Mar. 14, 2022, US Provisional Application No. 62/907,992 filed Sep. 30, 2019, US Provisional Application No. 62/801,202 filed Feb. 05, 2019, US Provisional Application No. 63/160,524 filed March 12, 2021, US Provisional Application No. 63/213,646 filed June 22, 2021, US Provisional Application No. 63/390,784 filed July 20, 2022, and US Provisional Application No. 63/416,764 filed October 17, 2022.

### FIELD OF DISCLOSURE

The disclosed subject matter pertains to apparatuses and methods for outdoor power equipment (e.g., lawn maintenance devices, etc.), for instance, having one or more features discussed herein, such as an adjustable footrest and/or the ability to convert between seated and standing operator positions for one or more components, such as a rollover protection (ROP) system, operator controls, an operator seat back, or other features discussed herein.

### BACKGROUND

Manufacturers of power equipment for outdoor maintenance applications offer many types of machines for general maintenance and mowing applications. Generally, these machines can have a variety of forms depending on application, from general urban or suburban lawn maintenance, rural farm and field maintenance, to specialty applications. Even specialty applications can vary significantly. For example, mowing machines suitable for sporting events requiring moderately precise turf, such as soccer fields or baseball outfields may not be suitable for events requiring very high-precision surfaces such as golf course greens, tennis courts and the like.

Power equipment can vary in terms of available operator positions. Some power equipment have a standing and/or walking operator positions adjacent to the power equipment (e.g., push mowers or tillers, etc.), while other power equipment have a riding operator positions on the power equipment, such as a seated operating position (e.g., riding mowers, etc.) or a standing operator position (e.g., stand-on mowers, etc.).

Modern maintenance machines also offer multiple options for power source. The various advantages associated with electric motor engines, gasoline engines, natural gas engines, diesel engines and so forth also impact the mechanical design and engineering that go into these different maintenance devices. Meeting the various challenges associated with different maintenance and mowing applications and the benefits and limitations of different power sources results in a large variety of maintenance machines to meet consumer preferences.

### BRIEF SUMMARY

The following presents a simplified summary in order to provide a basic understanding of some aspects of the disclosure. This summary is not an extensive overview of the disclosure. It is not intended to identify key/critical elements or to delineate the scope of the disclosure. Its sole purpose is to present some concepts of the disclosure in a simplified form as a prelude to the more detailed description that is presented later.

Various embodiments of the present disclosure comprise an outdoor power equipment having a convertible sitting and standing ride-on configurations, adjustable footrest(s), and/or other features discussed herein. One example embodiment is an outdoor power equipment, comprising: a frame; a plurality of drive wheels rotatable about a drive wheel rotation axis; a rollover protection (ROP) bar secured to the frame; an operator seat secured to the frame; drive controls for operator-initiated drive and steering functions of the outdoor power equipment; and a standing platform positioned at least in part rearward of the operator seat, wherein a portion of the ROP bar is movable between a sitting configuration and a standing configuration of the outdoor power equipment, and wherein the ROP bar comprises at least one ROP lock/release configured to alternately be in a locked configuration that prevents movement of the portion of the ROP bar and an unlocked configuration that allows movement of the portion of the ROP bar.

Another example embodiment is an outdoor power equipment, comprising: a frame; a plurality of drive wheels rotatable about a drive wheel rotation axis; a rollover protection (ROP) bar secured to the frame; an operator seat secured to the frame; drive controls for operator-initiated drive and steering functions of the outdoor power equipment; and a standing platform positioned at least in part rearward of the operator seat, wherein the drive controls are movable between a sitting configuration and a standing configuration of the outdoor power equipment.

A further example embodiment is an outdoor power equipment, comprising: a frame; a plurality of drive wheels rotatable about a drive wheel rotation axis; a rollover protection (ROP) bar secured to the frame, wherein a portion of the ROP bar is movable between a ROP sitting configuration and a ROP standing configuration; an operator seat secured to the frame; drive controls for operator-initiated drive and steering functions of the outdoor power equipment; and a standing platform positioned at least in part rearward of the operator seat, wherein the drive controls are movable between a control sitting configuration and a control standing configuration.

To accomplish the foregoing and related ends, certain illustrative aspects of the disclosure are described herein in connection with the following description and the drawings. These aspects are indicative, however, of but a few of the various ways in which the principles of the disclosure can be employed and the subject disclosure is intended to include all such aspects and their equivalents. Other advantages and features of the disclosure will become apparent from the following detailed description of the disclosure when considered in conjunction with the drawings.

### BRIEF DESCRIPTION OF THE DRAWINGS

Figure 1 illustrates a front perspective drawing of a first example lawn maintenance apparatus configured for a seated operating position, according to various embodiments of the present disclosure.
Figure 2 illustrates a rear perspective drawing of the first example lawn maintenance apparatus configured for a standing operating position, according to various embodiments of the present disclosure.
Figure 3 illustrates an elevated front view of a second example embodiment of a lawn maintenance apparatus according to various aspects discussed herein.
Figure 4 illustrates a close view of the front of lawn maintenance apparatus configured for standing operation, showing footrests and the step between them.
Figure 5 illustrates a pair of rear images of lawn maintenance apparatus configured for standing operation, according to various aspects discussed herein.
Figure 6 illustrates an image of a closed battery bay of an example lawn maintenance apparatus, according to various aspects discussed herein.
Figure 7 illustrates an image of an interior of a battery bay of an example lawn maintenance apparatus, according to various aspects discussed herein.
Figure 8 illustrates two images of a ROP lock/release of an example lawn maintenance apparatus according to various aspects discussed herein.
Figure 9 illustrates two images of a movable footrest of an example lawn maintenance apparatus according to various aspects discussed herein.
Figure 10 illustrates two images of a mower controls and control mount of an example lawn maintenance apparatus, according to various aspects discussed herein.
Figure 11 illustrates three images showing mower controls rotated outward/upward to facilitate operator entry/exit of an operator seat of an example lawn maintenance apparatus, according to various aspects discussed herein.
Figure 12 illustrates a top image of a right lap bar (in a standing position) of a pair of lap bars that can be employed in mower controls of an example lawn maintenance apparatus, according to various aspects discussed herein.
Figure 13 illustrates a top view of a display interface that can be employed in mower controls of an example lawn maintenance apparatus according to various aspects discussed herein.
Figure 14 illustrates two images of a rotation track for a seat back in an upright position (left image) and a down position (right image) for an example lawn maintenance according to various aspects discussed herein.
Figure 15 illustrates an image of a first example embodiment of a lawn maintenance apparatus that can employ one or more features discussed herein for seated operation only, according to various aspects discussed herein.
Figure 16 illustrates an image of a second example embodiment of a lawn maintenance apparatus that can employ one or more features discussed herein for dedicated seated operation, according to various aspects discussed herein.
Figure 17 illustrates left perspective (top) and right (bottom) views of a third example embodiment of a lawn maintenance apparatus in a seated configuration, according to various aspects discussed herein.
Figure 18 illustrates top (top) and front (bottom) views of the third example embodiment in the seated configuration, according to various aspects discussed herein.
Figure 19 illustrates rear (top) and left (bottom) views of the third example embodiment in the seated configuration, according to various aspects discussed herein.
Figure 20 illustrates left perspective (top) and right (bottom) views of the third example embodiment in a standing configuration, according to various aspects discussed herein.
Figure 21 illustrates top (top) and front (bottom) views of the third example embodiment in the standing configuration, according to various aspects discussed herein.
Figure 22 illustrates rear (top) and left (bottom) views of the third example embodiment in the standing configuration, according to various aspects discussed herein.
Figure 23 illustrates front (left image) and right (right image) views of a first prototype of the third example embodiment, in connection with various aspects discussed herein.
Figure 24 illustrates a rear view of the first prototype, showing the left controls in a forward (seated) position and the right controls in a rearward (standing) position, in connection with various aspects discussed herein.
Figure 25 illustrates a drawing showing components associated with handles for adjusting controls in the first prototype, in connection with various aspects discussed herein.
Figure 26 illustrates a view of a cable and latch of a bar engaged with a shoulder bolt for securing the controls of the first prototype in a standing position, in connection with various aspects discussed herein.
Figure 27 illustrates two images of the system for moving controls of the first prototype, in connection with various aspects discussed herein.
Figure 28 illustrates a knob that can be used to lock associated controls in position in the first prototype, in connection with various aspects discussed herein.
Figure 29 illustrates a mount attached to a ROP bar for a display and associated keypad in the first prototype, in connection with various aspects discussed herein.
Figure 30 illustrates armrest mounted controls for controlling various functions of the first prototype including an operating mode, in connection with various aspects discussed herein.
Figure 31 illustrates additional armrest mounted controls for controlling various functions of the first prototype including a deck height adjustment, in connection with various aspects discussed herein.
Figure 32 illustrates three cutaway images showing operation of a ROP lock/release useable in connection with various embodiments, according to various aspects discussed herein.
Figure 33 illustrates left perspective (top) and right (bottom) views of a fourth example embodiment, according to various aspects discussed herein.
Figure 34 illustrates top (top) and front (bottom) views of the fourth example embodiment, according to various aspects discussed herein.
Figure 35 illustrates rear (top) and left (bottom) views of the fourth example embodiment in the seated configuration, according to various aspects discussed herein.
Figure 36 illustrates front (left image) and rear (right image) drawings of a second prototype associated with the fourth example embodiment, in connection with various embodiments discussed herein.
Figure 37 illustrates a right perspective view of the prototype of embodiment, in connection with various embodiments discussed herein.

It should be noted that the drawings are diagrammatic and not drawn to scale. Relative dimensions and proportions of parts of the figures have been shown exaggerated or reduced in size for the sake of clarity and convenience in the drawings. The same reference numbers are generally used to refer to corresponding or similar features in the different embodiments, except where clear from context that same reference numbers refer to disparate features. Accordingly, the drawings and description are to be regarded as illustrative in nature and not as restrictive.

While embodiments of the disclosure pertaining to machine vision systems for power equipment machines are described herein, it should be understood that the disclosed machines, electronic and computing devices and methods are not so limited and modifications may be made without departing from the scope of the present disclosure. The scope of the systems, methods, and electronic and computing devices for machine vision devices are defined by the appended claims, and all devices, processes, and methods that come within the meaning of the claims, either literally or by equivalence, are intended to be embraced therein.

### DETAILED DESCRIPTION

The following terms are used throughout the description, the definitions of which are provided herein to assist in understanding various aspects of the subject disclosure.

As used in this application, the terms "outdoor power equipment", "outdoor power equipment machine", "power equipment", "maintenance machine" and "power equipment machine" are used interchangeably and are intended to refer to any of robotic, partially robotic ride-on, walk-behind, sulky equipped, autonomous, semi-autonomous (e.g., user-assisted automation), remote control, or multi-function variants of any of the following: powered carts and wheel barrows, lawn mowers, lawn and garden tractors, lawn trimmers, lawn edgers, lawn and leaf blowers or sweepers, hedge trimmers, pruners, loppers, chainsaws, rakes, pole saws, tillers, cultivators, aerators, log splitters, post hole diggers, trenchers, stump grinders, snow throwers (or any other snow or ice cleaning or clearing implements), lawn, wood and leaf shredders and chippers, lawn and/or leaf vacuums, pressure washers, lawn equipment, garden equipment, driveway sprayers and spreaders, and sports field marking equipment.

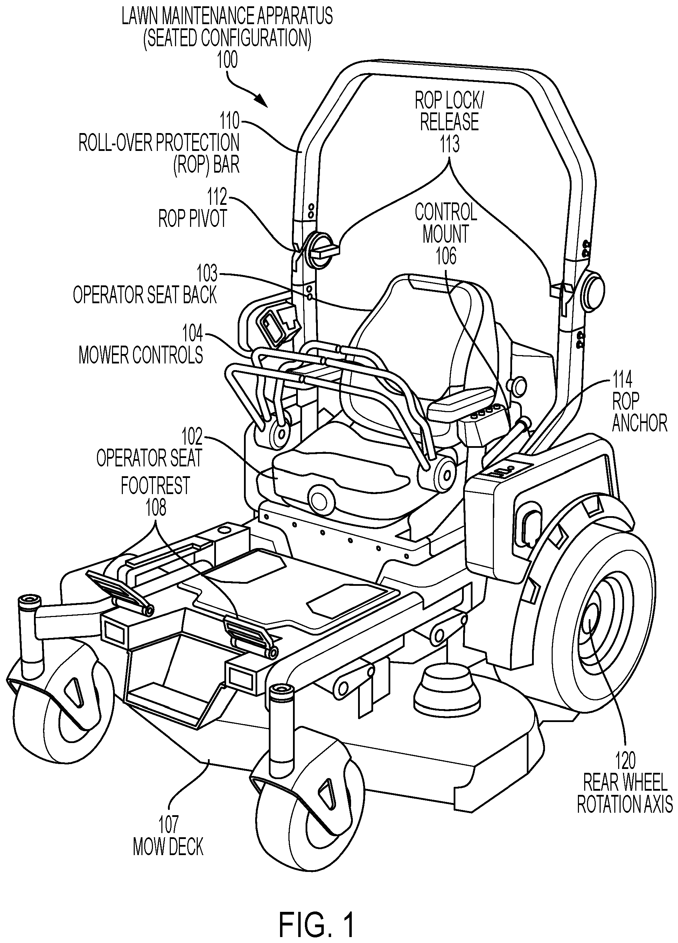

Figure 1 illustrates a front perspective drawing of a first example lawn maintenance apparatus 100 configured for a seated operating position, according to various embodiments of the present disclosure. Although example lawn maintenance apparatuses (e.g., lawn maintenance apparatus 100, etc.) are provided for the purpose of illustrating various aspects discussed herein, various embodiments can be or can be employed within or in connection with other outdoor power equipment (e.g., snow thrower(s), etc.) Lawn maintenance apparatus 100 can be a convertible standing/sitting lawn maintenance apparatus, in various embodiments. As illustrated in Figure 1, lawn maintenance apparatus 100 is in a seated configuration, allowing an operator to ride in a seated position on an operator seat 102 with mower controls 104 for controlling powered operations of lawn maintenance apparatus 100 (e.g., drive functions, steering functions, and so forth, whether mechanical, electro-mechanical, hydraulic, pneumatic, or other suitable means of power operation), and/or electronic control or computer functions of lawn maintenance apparatus 100 (e.g., stored electronic settings, Global Positioning System (GPS) navigation, operator input controls/output indicators, status input controls/output indicators, and so forth). A mow deck 107 is provided beneath a support structure (e.g., frame, etc.) of lawn maintenance apparatus 100, and in the embodiment depicted by Figure 1, between the front and rear wheels thereof, although in other embodiments mow deck 107 can be in front of or behind both the front and rear wheels. It will be appreciated that the mow deck 107 can take on a number of configurations without departing from the scope of the disclosed technology. For example, the mow deck 107 can include multiple spindles operatively coupled to respective motors and one or more blades for cutting grass.

In various embodiments, lawn maintenance apparatus 100 can include a roll over protection (ROP) bar 110 with a ROP anchor point 114 near to a rear wheel rotation axis 120 of lawn maintenance apparatus 100. In one or more embodiments, ROP anchor point 114 can be within about 6 inches or less (or a foot or less, etc.) of rear wheel rotation axis 120. One or more footrests 108 can also be provided for operator comfort.

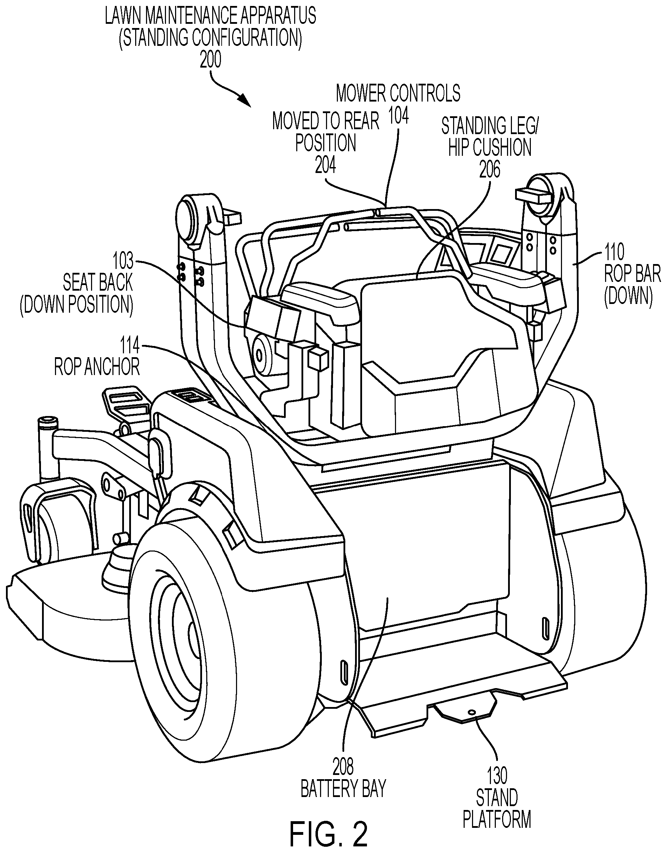

According to disclosed embodiments, lawn maintenance apparatus 100 can be mechanically changed or otherwise converted to a standing configuration. Referring to Figure 2, illustrated is a rear perspective drawing of the first example lawn maintenance apparatus 100 configured for a standing operating position 200, according to various embodiments of the present disclosure. Standing configuration 200 includes mower controls 104 moved to a rear position 204 by way of moving controls 104 along control mount 106 to a rear position, near an operator's hands when standing on stand platform 130. In a seated position, seat back 103 can be in a first (e.g., upright) position whereby it can be employed by a seated operator. In various embodiments, one or more of: mower controls 104, seat back 103 and ROP bar 110 can be movable to change from the seated configuration to the standing configuration, and back again. As an example, mower controls 104 can be provided on a control mount 106 that can allow mower controls 104 to move between a seated operator hand position (as illustrated in Figure 1, etc.) and a standing operator hand position (see Figure 2 at reference numbers 204, etc.). Additionally, a standing leg/hip pad 203 is provided for an operator to lean against when standing on stand platform 130. Likewise, ROP bar 110 is folded backward at ROP pivot 112 out of an operator's physical space and field of view when standing on stand platform 130. In various embodiments, ROP bar 110 can be folded such that the top half of ROP bar 110 substantially aligns with the bottom half of ROP bar 110. As another example, seat back 103 can pivot or fold forward to a second or down position (for standing operation, e.g., as shown in Figure 2, etc.) allowing an operator standing on stand platform 130 to lean against a standing leg/hip pad 203 and access mower controls 104 without interference from seat back 103. In various embodiments, ROP bar 110 can fold downward away from an elevated position (as depicted by Figure 1) by way of a ROP pivot 112 into a down or stowed position wherein at least a portion of ROP bar 110 can be underneath cushion 206 (as depicted in Figure 2). In further embodiments, any suitable combination of the foregoing can be movable parts to accommodate comfortable operator position in the seated configuration versus the standing configuration.

Moreover, in various embodiments, seated configuration and standing configuration can be selected to place the operator's head and hips at or near rear wheel rotation axis 120 to minimize centrifugal force experienced by the operator when conducting a turn of lawn maintenance apparatus 100. This head and hip position can significantly reduce unpleasant user experience resulting from tight turns, or even zero radius turns, implemented about an axis intersecting rear wheel rotation axis 120.

The backward range of motion of mower controls 104 along control mount 106 can allow a standing operator's hands to be positioned coincident with mower controls moved to rear position 204. This allows the user to comfortably operate the lawn maintenance apparatus 100 while in the standing configuration 200. Moreover, the standing operator's head position can be closely aligned with a vertical rear axis of rotation that intersects rear wheel rotation axis 120. Vertical rear axis of rotation can be an axis about which lawn maintenance apparatus 100 spins or otherwise rotates when performing a turn. Thus, with operator's head position near or on vertical rear axis of rotation, centrifugal force on operator's head position is minimized.

The forward range of motion of mower controls 104 along control mount 106 can allow a seated operator's hands to be positioned coincident with mower controls 104 in a first (e.g., forward) position. Further, the seated operator's head position can be at or forward of, but still near the rear axis of rotation to minimize centrifugal force on operator's head position when in the seated configuration.

Conversion of lawn maintenance apparatus 100 from a first (e.g., seated) position to a second (e.g., standing) position can be accomplished by converting one or more components (e.g., ROP bar 110, mower controls 104, seat back 103, etc.) from their respective first (e.g., seated) position to their second (e.g., standing) position.

In various embodiments, mower controls 104 can be provided on a control mount 106 comprising a rail that mower controls 104 can slide along from a first position (e.g., a position for use by a seated operator) to a second position (e.g., for use by a standing operator). One or more control releases and/or locks can be provided on mower control 104 (e.g., one for the left side and one for the first side) to allow mower controls 104 to be locked in place (e.g., at their first position or second position) or to be unlocked to allow motion between their first position and second position. In various embodiments, control locks/releases can be configured such that they can only be in the locked position when mower controls 104 are in their first position or their second position. Although the example embodiment discussed below shows control releases/locks located on the underside of the front of mower controls 104, in various embodiments, control releases/locks can be provided in other positions (e.g., side, back, etc.).

As shown in Figures 1-2 (and in other embodiments in further Figures discussed below), ROP bar 110 can comprise two ROP pivots 112, about which the top portion of ROP bar 110 can rotate relative to the lower portion of the ROP bar. In various embodiments, each ROP pivot 112 can comprise a ROP lock/release 113 to allow ROP bar 110 to be locked in place (e.g., at its first position or second position) or to be unlocked to allow motion between its first position and second position. In various embodiments, when ROP bar 110 is in either its first position or the second position, each ROP lock/release 113 can be pulled (e.g., manually) from a locked position to an unlocked position, and when all ROP locks/releases 113 are in their unlocked positions, ROP bar 110 can be moved (e.g., rotated) out of its first position or its second position (e.g., to transition between its first and second positions, or to move back into its first or second positions). In various embodiments, ROP locks/releases 113 can be configured such that they can only be in the locked position when ROP bar 110 is in its first position or its second position. In various embodiments, ROP locks/releases 113 placed in the unlocked position can remain in the unlocked position until ROP bar 110 is placed or otherwise positioned into one of its first position or its second position from an intermediate position between its first position or its second position (e.g., via transition between its first and second positions, or by moving back into its first or second positions). Depending on the embodiment, any of a variety of mechanisms (e.g., spring plates, locking levers, etc.) can be employed by ROP locks/releases 113 to secure them in the unlocked position until ROP bar 110 is moved out of its first or second position and then returned to its first or second position.

In various embodiments, seat back 103 can comprise or be coupled to one or more tracks, rods, etc., such that it can rotate from a first (e.g., upright, etc.) position to a second (e.g., down, etc.) position. In some embodiments, seat back 103 can be secured in at least one of its first or second positions such that rotation of seat back 103 is prevented until one or more additional actions are taken, such as pulling seat back 103 in a direction (e.g., upward) to align it with tracks along which it can rotate, operating locks/releases, etc.

Although lawn maintenance apparatus includes ROP bar 110, some embodiments (e.g., consumer models, etc.) can omit ROP bar 110. In embodiments in which it is included, ROP bar 110 can be upright in the seated mode, whereby it can provide ROP, and can be folded down (e.g., folded backward as shown in Figure 2, etc.) and/or removed in the standing mode.

As discussed above, mower controls (e.g., 104, 204, etc.) can be at a first position (e.g., for seated operation) and a second position (e.g., for standing operation). In some embodiments, mower controls can move between the first position and the second position as discussed above, while in other embodiments, mower controls can be removable from a first mount/clip and attach the same or another seat back to the first mount/clip (at the same or another position) or a second mount/clip, etc. Although referred to above as a first position and a second position, various embodiments can employ adjustable mower controls such that a first range of positions (e.g., customizable for operator(s)) can be employed for seated operation and a second range of positions (e.g., customizable for operator(s)) can be employed for standing operation.

Various embodiments can employ operator presence control (OPC), whereby operation (e.g., an ability to begin and/or maintain operating) of the lawn maintenance apparatus can be conditioned on detecting an operator presence at one or more of the stand platform or the operator seat. In various embodiments, one or both of the stand platform or operator seat can be spring loaded for OPC and suspension, although other techniques can be employed to detect an operator additionally or alternatively. In some embodiments, OPC can be checked at either location regardless of the configuration of lawn maintenance apparatus. In other embodiments, OPC can be checked only at the stand platform when the lawn maintenance apparatus is in the standing mode, and only at the operator seat when the lawn maintenance apparatus is in the seated mode (e.g., in some such embodiments, operation can be disabled unless the lawn maintenance apparatus is fully in the standing mode or fully in the seated mode).

In still further embodiments, means for moving one or more of the movable parts (ROP bar 110, seat back 103, mower controls 104, footrest 108, etc.) can be integrated into a common or linked motion so that movement of a plurality of the foregoing movable parts can be implemented by activating a single motion initiator. The motion initiator can be by mechanical (e.g., gears, pulleys, levers, pedals, bars, etc.), hydraulic, pneumatic, electro-mechanical, etc., means, resulting in movement of the plurality of movable parts, which can be one or manual, assisted manual (e.g., whereby an operator can initiate the movement with a reduced force, etc.), or automatic. As an illustrative example, an operator manually applying pressure to mower controls 104 can cause the common or linked motion means to move mower controls in conjunction with one or more of: operator seat 102, seat back 103, ROP bar 110, footrest 108. Said differently, an operator applying mechanical force to a mechanical motion initiator to move a first movable part (e.g., ROP bar 110, seat back 103, operator seat 102, mower controls 104, footrest 108, ...) can result in movement of the first movable part and one or more additional movable parts (e.g., ROP bar 110, seat back 103, operator seat 102, mower controls 104, footrest 108, ...). In other embodiments, the motion initiator can be a powered means such as one or more electro-mechanical motor(s), hydraulic motor(s), pneumatic motor(s) or the like, that when mechanically or electrically engaged results in movement of the plurality of movable parts. In such embodiments, a single control input (e.g., button press, switch turn, touch-screen activator, and so forth) can initiate the powered motion initiator. In further embodiments, a combination of mechanical and powered motion initiators is within the scope of the present disclosure. Note that in some embodiments, fewer than all movable parts can be actuated by a single motion initiator. In such embodiments, a plurality of motion initiators can be provided to move respective subsets of the movable parts (e.g., a first motion initiator can be provided to move ROP bar 110, a second linked motion initiator to move both seat back 103 and mower controls 104, and a third motion initiator to move footrest 108; other combinations are within the scope of the present disclosure as well). In other embodiments, various elements (ROP bar 110, seat back 103, mower controls 104, etc.) can be independently movable, such that each can be separately adjusted between seated and standing positions without the other(s) being also adjusted between seated and standing positions.

As discussed above, conversion of one or more components (e.g., ROP bar, seat back, controls, footrest, etc.) of the lawn maintenance apparatus from position(s) associated with the seated mode to position(s) associated with the standing mode can be automatic, manual, or assisted manual, and can employ one or more of mechanical, electromechanical, electric, electronic, pneumatic, hydraulic, hydrostatic, etc. means. In embodiments with automatic conversion, conversion can occur in response to one or more of a user input, detected operator presence, etc. Additionally, in any such embodiment, movement between two or more components of the lawn maintenance apparatus can be linked in any combination, such as ROP bar with seat back, ROP bar with controls, ROP bar with footrest, seat back with controls, seat back with footrest, controls with footrest, ROP bar with seat back and controls, all four components, etc. In some embodiments (e.g., embodiments wherein not all components convert automatically, etc.), an optional display included on lawn maintenance apparatus can provide user guidance for conversion of one or more components between the seated and standing positions associated with the one or more components. In some such embodiments, the user guidance can be based on a present status or position of those components, which can be detected via various means (e.g., sensors, switches, etc. that activate when in respective first or second positions, such as detecting proximity (e.g., magnetically, etc.) of the top half of ROP bar 110 to the bottom half of ROP bar 110 to determine if ROP bar 110 is in the down position (or similarly with seat back 103 and operator seat 102, etc.), a circuit that only closes when ROP bar 110 is in the vertical/upright position, switches that determine whether mower controls 104 are in the first/second positions, etc.).

In various embodiments, accessories could be mounted to the lawn maintenance apparatus 100. A hauling accessory (e.g., crate, box, wagon, etc.) could be mounted to a floorplate of the lawn maintenance apparatus when in standing configuration, or could be mounted to stand platform 130 when in sitting configuration. In further embodiments, one or more additional seats can be provided. For instance, a foldable seat that folds out from behind seat back 103 or another portion of the rear of lawn maintenance apparatus 100 can be situated behind an operator in the standing configuration to briefly sit down in standing configuration. This foldable seat can have a seat back (similar to seat back 103) in an embodiment. In other embodiments, a post hole can be provided on a rear portion of lawn maintenance apparatus in which a seat-mounted post can be secured to add an additional seat in standing configuration. In yet another embodiment, when an operator stands on stand platform 130 with lawn maintenance apparatus 100 in sitting configuration, activation of movable controls to move one or more movable parts from the sitting configuration to the standing configuration can be implemented (e.g., in response to a pressure switch on stand platform 130 that senses a threshold weight or pressure on stand platform 130 to activate the movable controls).

In addition to the foregoing, lawn maintenance apparatus 100 can be an electrically powered apparatus having batteries and one or more electric motors. As one example, electric axle motors can be positioned in the left and right rear axles of lawn maintenance apparatus 100 and can provide motive power for the left and right rear wheels, respectively. Electrical power can be stored with a set of modular battery packs that can be located within battery bay 208. Modular battery packs can be independently removable and replaceable. In an embodiment, modular battery packs can be wireless batteries having fixed electrical contacts that make electrical contact to a wire harness (not depicted) when seated within a battery bay of lawn maintenance apparatus, and can be electrically disconnected from the wire harness when physically removed from the battery bay. In some embodiments, the battery bay 208 can be beneath or approximately beneath a seat bottom of the lawn maintenance equipment, and batteries can be horizontally slid into or removed from battery bay 208 individually. The battery bay door can have one or more features (e.g., pneumatic hinges) that can facilitate a smooth opening of the battery bay door.

Alternatively, battery bay 208 can comprise a battery tray (not shown in Figure 2) configured to slide between an operating position within the lawn maintenance apparatus 100 and a loading/unloading position that can allow for batteries to be vertically placed into the battery tray. The operating position can be behind the seat bottom and above the standing platform, allowing vertical access to the battery tray. The batteries can be electrically connected to the lawn maintenance apparatus when the battery tray is in the operating position (within the battery bay), and the electrical connectivity of the batteries in the loading/unloading position can depend on the embodiment. In some embodiments, the batteries can be electrically connected to the lawn maintenance apparatus when in the battery tray while it is in the loading/unloading position (but can optionally be switched off). In other embodiments, the batteries in the battery tray can be electrically connected to the battery tray while it is in the loading/unloading position, but not to the lawn maintenance apparatus until the battery tray is in the operating position (e.g., the connection between the batteries and the lawn maintenance apparatus can be through the battery tray once in the operating position in the battery bay, etc.). In further embodiments, the batteries in the battery tray can be electrically isolated unless the battery tray is in the operating position (e.g., the connection between the batteries and the lawn maintenance apparatus can be made once the batteries are slid into position along with the battery tray, etc.). In various embodiments, the battery tray can be accessed regardless of the position(s) of the ROP bar, seat back, mower controls, etc.

In some embodiments, electrical connections on the lawn maintenance apparatus and/or battery/batteries can be covered when not connected to one another, for example, with spring-loaded or otherwise retractable covers that can retract as they are pushed together, which can help keep electrical contacts clean and free of dirt, lawn clippings, etc.

In various embodiments, one or more physical alignment features can be included on at least one of the optional battery tray, removable battery/batteries, or an interior portion of the battery bay other than the battery tray. In various embodiments, the physical alignment feature(s) can at least one of: facilitate physical alignment of the battery/batteries with an interior of the battery bay to ensure electrical connection of the battery/batteries, prevent insertion of the battery/batteries and/or battery tray if the battery/batteries are not aligned properly, and/or prevent damage (e.g., to the battery/batteries, battery bay, battery tray, etc.) that might otherwise result from misalignment.

As one example, one or more handles can be included on the battery/batteries and can help facilitate physical alignment of the battery/batteries in one or more ways. For example, if the battery/batteries are aligned closely enough for the handle(s) to align with a track or other portion of the interior of battery bay 208 and/or tray, this can provide smaller adjustment(s) to ensure proper alignment of the battery/batteries. Additionally or alternatively, if the battery/batteries are not aligned closely enough for the handle(s)/track(s) to align, the misalignment can optionally prevent the battery bay 208 and/or tray from closing. As another option, the handles can optionally retract into or fold down onto the battery/batteries, wherein the retraction or folding can be caused by alignment of the battery/batteries or handle with a feature of the battery bay 208 and/or tray (if sufficiently aligned), such that the battery bay 208 and/or tray will not close if misaligned. Additionally or alternatively, handle and/or track features can ensure that the battery/batteries have an appropriate orientation, and optionally can prevent putting the battery tray in the operating position and/or closing battery bay 208 when they have an inappropriate orientation.

Additionally or alternatively, the battery bay 208 and/or tray can have raised/contoured features (e.g., on the top of a bottom surface, etc.) that can engage with matching raised/contoured features on the underside of the battery/batteries. In various embodiments, these features can ensure that the battery/batteries will not fully insert into the battery bay 208 and/or tray unless properly aligned, and optionally can be such that the battery can only be inserted with an appropriate orientation. In some such embodiments, the battery bay 208 and/or tray will not be able to close if a battery is misaligned, because the misaligned battery/batteries will not be positioned properly for full insertion into the battery bay. In some embodiments, electrical contact between the battery and lawn maintenance equipment can occur via such features.

In embodiments wherein the lawn maintenance apparatus has a display interface, the display can optionally provide user guidance related to one or more of battery insertion, removal, or replacement. In some such embodiments, an auxiliary power source (e.g., small rechargeable or replaceable battery/batteries, etc.) can be provided to ensure that the display interface is powered during battery insertion, removal, or replacement. In various embodiments, context-specific feedback or information can be provided to a user (e.g., if the battery tray is electrically connected to the battery/batteries, an indication can be given for each battery location of the tray whether a battery with sufficient charge is detected at that location, where no such detected battery could result from a discharged battery, a misaligned battery, etc.).

In some embodiments, one or more features (e.g., a lever) can provide a mechanical advantage that can assist an operator in securing the battery tray (e.g., when loaded) in the operating position in the battery bay. In various embodiments, a locking feature can be included to lock the battery tray in the operating position. In some embodiments, the mechanical advantage feature(s) can act as the locking feature or part of the locking feature once the battery tray is in the operating position. One example embodiment can comprise a door that can cover a back face of the battery bay, be hinged at the bottom, and capable of folding down over the standing platform. When folded down over the standing platform, the door can provide a track for the battery tray to slide or roll along, and when the battery tray is partly within the battery bay, the door can be used as a lever to assist an operator in placing the battery tray in the operating position. Additionally or alternatively, the door can lock or be locked when in its upright position.

Figure 1 additionally illustrates that lawn maintenance apparatus 100 can comprise one or more movable footrests 108. The movable footrest(s) 108 can accommodate different size operators when lawn maintenance apparatus 100 is in a seated configuration. Movable footrest(s) 108 can be moved between any of a plurality of positions, providing comfort for users in a range of sizes. In various embodiments, control(s) can be included to one or more of lock and/or release each movable footrest 108 to allow adjustment, and in some such embodiments, the control(s) can be usable by an operator's foot (e.g., a pedal, etc.) and/or hand (e.g., a lever, button, etc.). In some embodiments, movable footrest 902 can be spring-biased back to a home position (e.g., a closest position to an operator seat, etc.), but can be easily offset with pressure from an operator's feet and/or hand, depending on the embodiment.

In some embodiments, each footrest 108 itself can act as a lever that can be pulled/pushed to reposition that footrest 108. For example, each footrest 108 can be spring-biased toward a locked position, wherein that footrest 108 is fixed in a given position for use by a seated operator. When the top of a footrest 108 is rotated back toward the operator seat 102, a tab on the bottom of the footrest 108 can disengage with one of a plurality of slots on the deck of lawn maintenance apparatus 100, and the footrest can be repositioned, such as by sliding it along a track in which a bottom portion of the footrest 108 is secured. Once a footrest 108 is in a new position, it can be allowed to rotate its top end away from the operator seat 102 and re-engage the tab on that footrest 108 with the same or a different slot on the deck of lawn maintenance apparatus 100, thereby allowing for repositioning of footrest 108.

Additionally or alternatively, some embodiments can provide a movable footrest 108 or stationary footrest that allows for an operator to see the front of a cutting deck of a lawn maintenance apparatus, for example, when the operator is in a standing position, or in either a seated or standing position. In some such embodiments, the footrest and/or floorboard can allow for the operator to see through them, such as by being made of a transparent material (e.g., Plexiglas^{®}, etc.), having slots/grating/holes/mesh/etc. that allows the operator to see through the floorboard/footrest to the front of the cutting deck. In other such embodiments, the floorboard/footrest can slide back (or forward to undo) or fold up (or fold down to undo) to allow an operator to see the front of the cutting deck (e.g., manually, automatically in response to user input, automatically in response to detected operator presence, etc.).

In various embodiments, steering can be via the drive (e.g., rear) wheels of lawn maintenance equipment and/or one or more wheels (e.g., casters, etc.) can have independent motor(s) that can be used for steering those wheel(s).

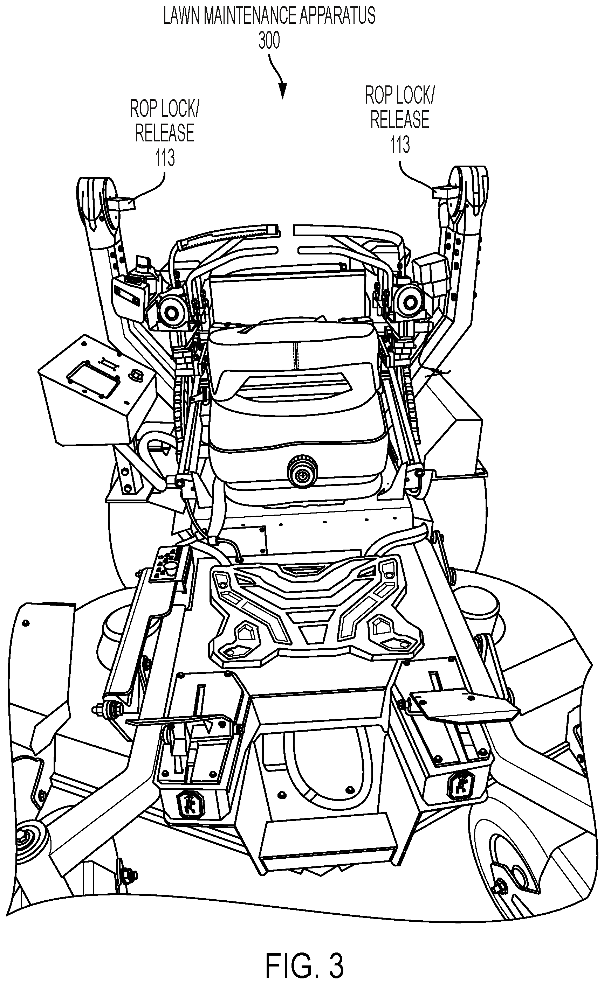

Figures 3-16 illustrate various images of prototype embodiments of lawn maintenance apparatuses employing components, features, and/or other aspects discussed herein.

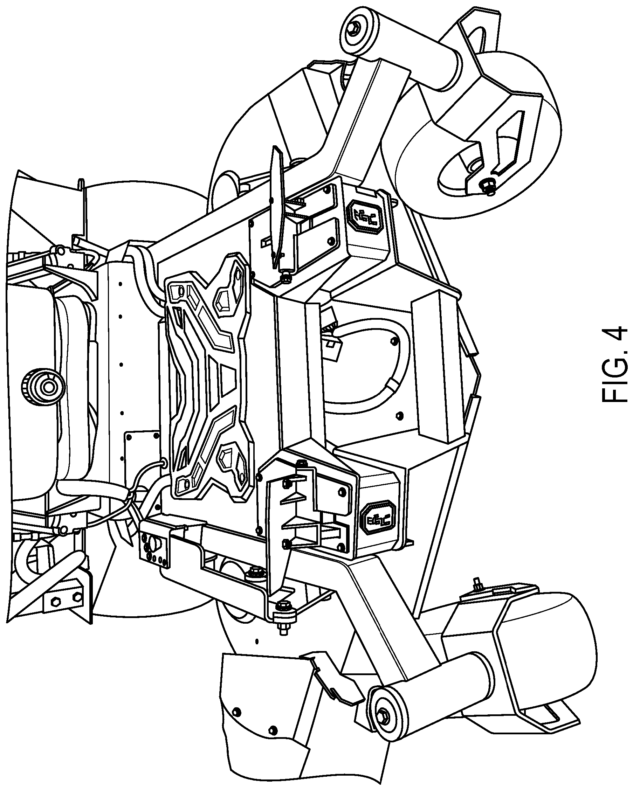

Referring to Figure 3, illustrated is an elevated front view of a second example embodiment of a lawn maintenance apparatus 300 according to various aspects discussed herein. Figure 3 shows lawn maintenance apparatus 300 in a standing configuration, with seat back 103 in a down position, ROP bar 110 in a down positions, and mower controls 104 in an elevated rearward position, all of which are for standing operation. Lawn maintenance apparatus 300 employs lap bars in mower controls 104, but in various embodiments, other types of controls can be employed. Near the top of Figure 3, ROP locks/releases 113 can be seen, which can comprise handles for an operator to pull to release the ROP bar from the locked position to transition between seated (e.g., ROP bar 110 up) and standing (e.g., ROP bar 110 folded down) operating positions. As can be seen near the bottom of Figure 3, lawn maintenance apparatus comprises two independently adjustable movable footrests 108. Between these movable footrests 108 is a lowered platform that can act as a step for entering or exiting the seated position of lawn maintenance apparatus 300. Referring to Figure 4, illustrated is a closer view of the front of lawn maintenance apparatus 300 configured for standing operation, showing footrests 108 and the step between them.

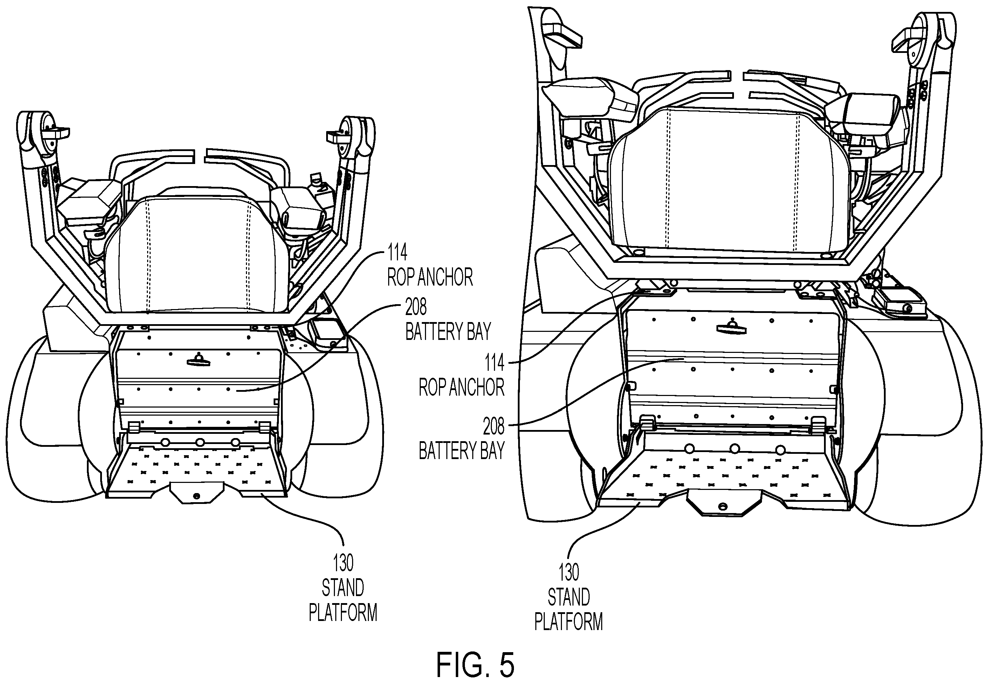

Referring to Figure 5, illustrated are a pair of rear images of lawn maintenance apparatus 300 configured for standing operation, according to various aspects discussed herein. Figure 5 shows ROP anchors 114 underneath hip/leg cushion 206, battery bay 208 beneath ROP anchors 114, and stand platform 130.

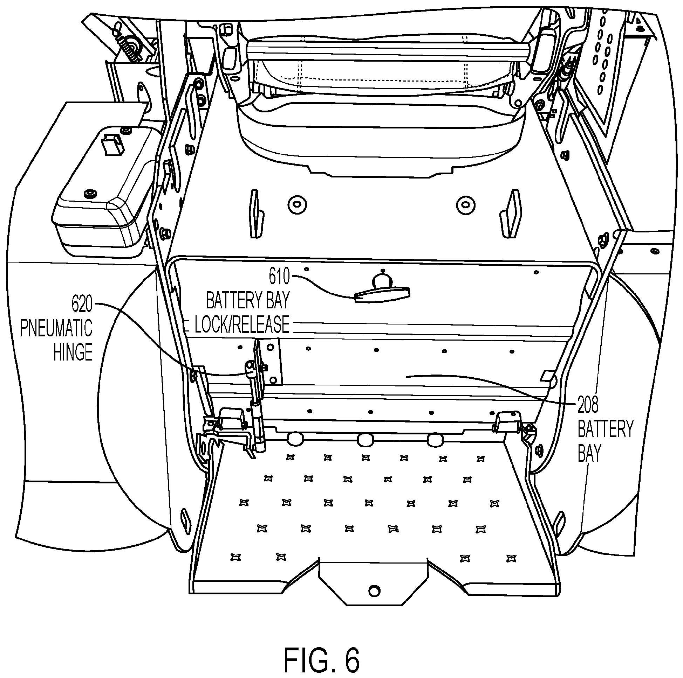

Referring to Figure 6, illustrated is an image of a closed battery bay 208 of an example lawn maintenance apparatus, according to various aspects discussed herein. Also shown in Figure 6 are a battery bay handle that can operate as a lock/release 610 for opening battery bay 208 to change out batteries or securing battery bay 208 during operation, etc. and a pneumatic hinge 620 that can provide for smoother opening/closing of the door of battery bay 208.

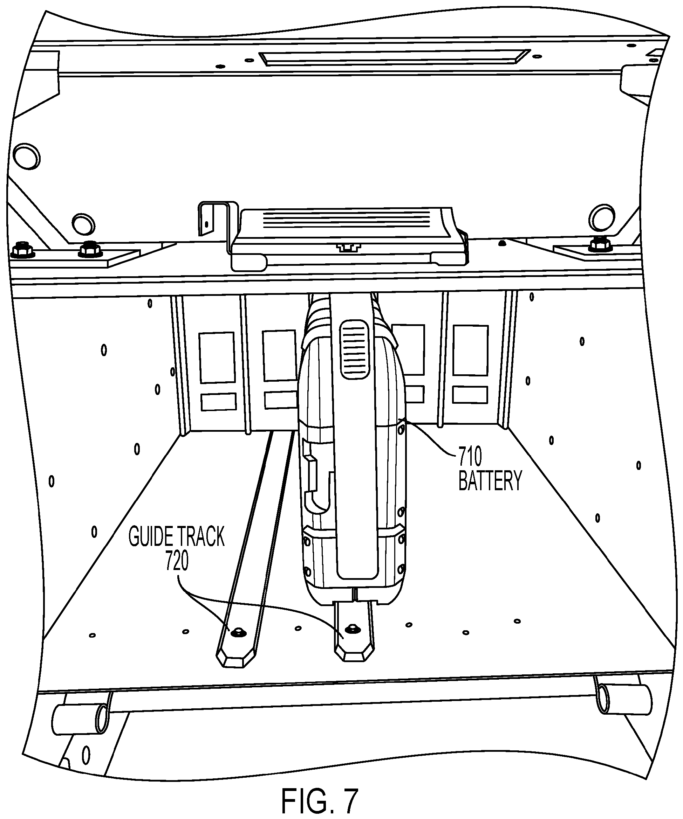

Referring to Figure 7, illustrated is an image of an interior of a battery bay 208 of an example lawn maintenance apparatus, according to various aspects discussed herein. Also shown in Figure 7 are a battery 710 and two guide tracks 720 to facilitate alignment of battery 710 and similar batteries in battery bay 208.

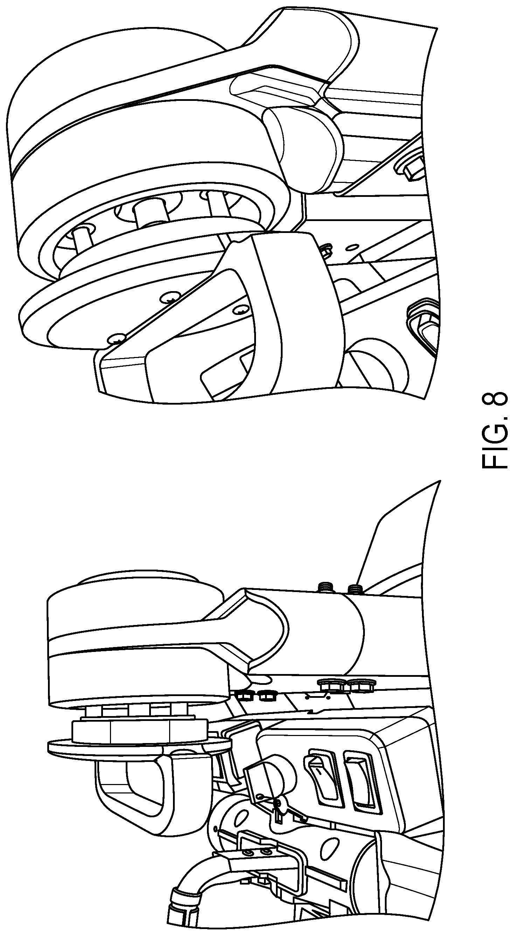

Referring to Figure 8, illustrated are two images of a ROP lock/release 113 of an example lawn maintenance apparatus according to various aspects discussed herein. As shown in Figure 8, the ROP lock/release 113 has been pulled out into an unlocked position, such that when all (e.g., both) ROP locks/releases 113 are in an unlocked position, ROP bar 110 can be moved out of the upright position (e.g., for seated operation) or down position (e.g., for standing operation; the position illustrated in Figure 8). ROP locks/releases 113 can employ any of a variety of mechanisms (e.g., spring plates, etc.) to temporarily secure them in the unlocked position shown in Figure 8, until ROP bar 110 is moved out of the upright or down position and while ROP bar 110 remains in neither the upright nor down position. Once ROP bar 110 is returned to either the upright or down position after having been moved out of such a position, ROP locks/releases can automatically return to their locked position, securing ROP bar 110 in either the upright or down position.

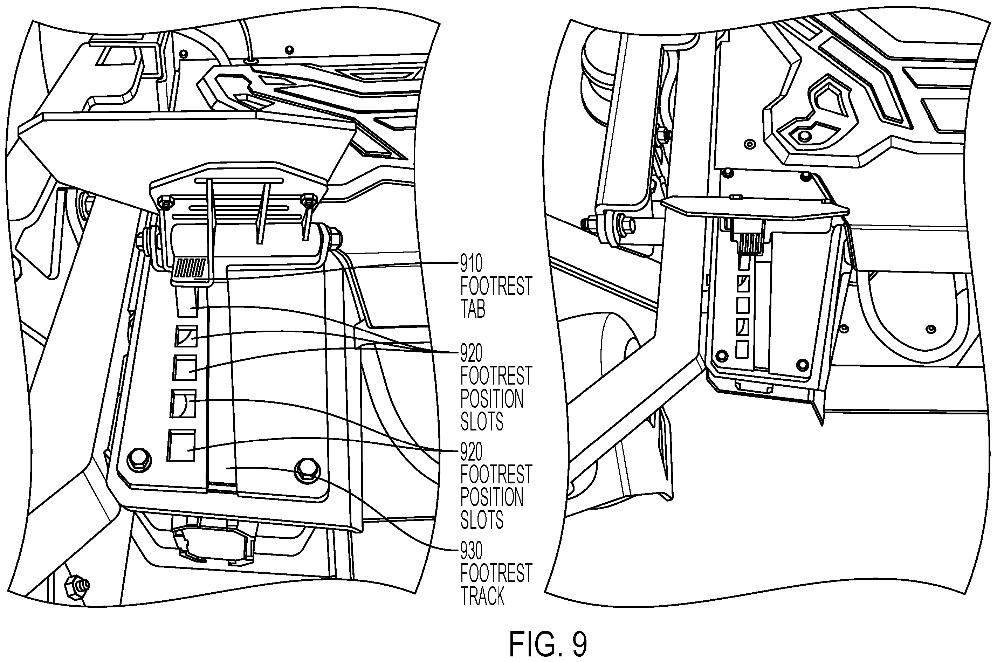

Referring to Figure 9, illustrated are two images of a movable footrest 108 of an example lawn maintenance apparatus according to various aspects discussed herein. Footrest 108 can comprise a footrest tab 910 that can engage with one or more footrest position slots 920 to provide a plurality of positions for footrest 108. Rotating footrest 108 away from the footrest position slots 920 can disengage footrest tab 910 from its current footrest position slot 920, allowing footrest 108 to slide along footrest track, whereby footrest tab 910 can be engaged with a different footrest position slot 920, thereby allowing for adjustment of the positioning of footrest 108 for individual operators.

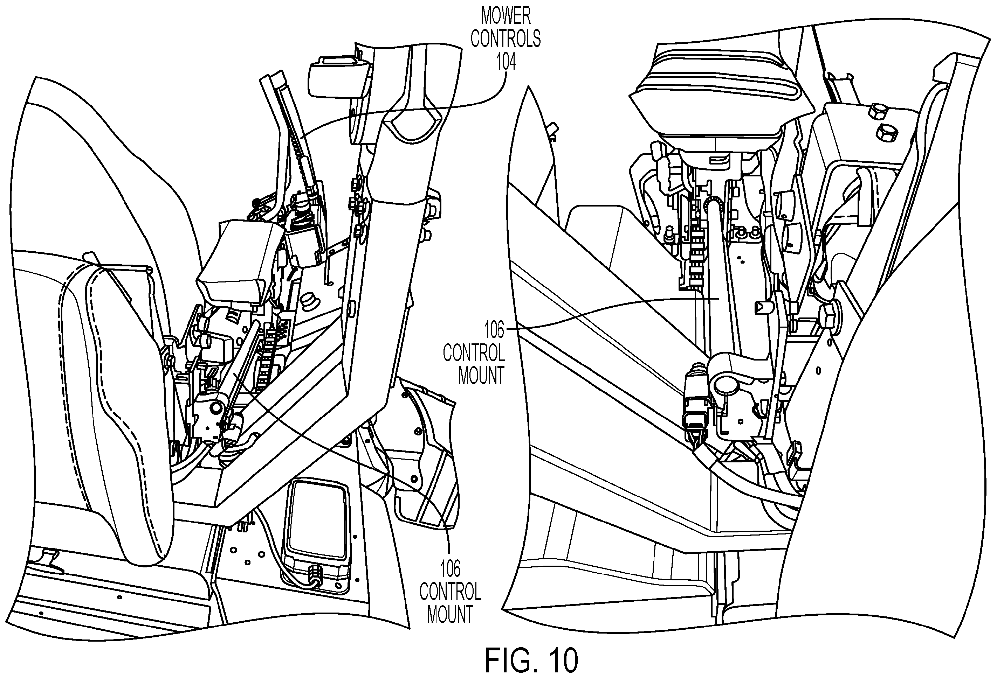

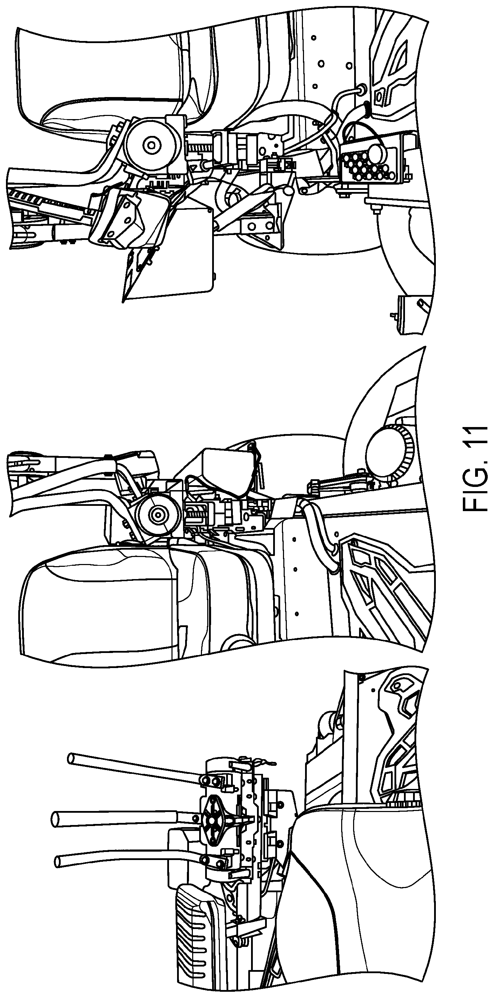

Referring to Figure 10, illustrated are two images of a mower controls 104 and control mount 106 of an example lawn maintenance apparatus, according to various aspects discussed herein. In various embodiments, mower controls 104 can move between a seated (forward) position and a standing (rearward) position along one or more control mounts 106, such as one on each side as in example lawn maintenance apparatuses 100 and 300. Additionally, at either the seated or standing positions, mower controls 104 can be adjusted (e.g., forward, backward, inward, outward, upward, downward, and/or rotationally, etc.) for better positioning for individual operators. Moreover, as can be seen in the left image of Figure 10, mower controls 104 can also be rotated outward away from an operating position to allow easier entry to and/or exit from operator seat 102. Referring to Figure 11, illustrated are three images showing mower controls 104 rotated outward/upward to facilitate operator entry/exit of operator seat 102 of an example lawn maintenance apparatus, according to various aspects discussed herein.

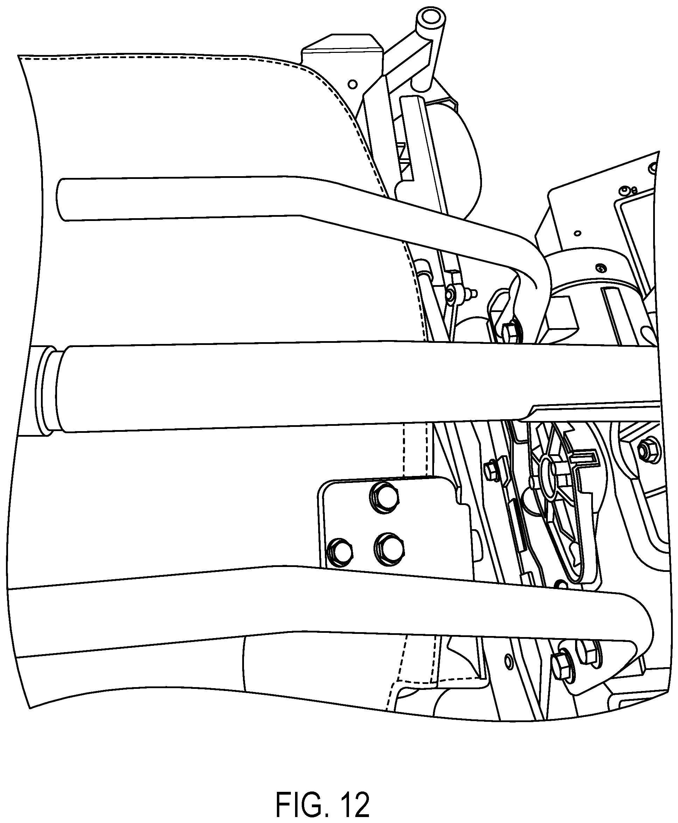

Referring to Figure 12, illustrated is a top image of a right steering lever (in a standing position) of a pair of steering levers that can be employed in mower controls 104 of an example lawn maintenance apparatus, according to various aspects discussed herein. In the illustrated embodiment, the right control includes a steering lever centrally positioned and movable between a pair of fixed supports. The steering lever can be pushed forward toward the front fixed steering support to cause the right drive wheel to rotate for forward movement. Conversely, the steering lever can be pulled back toward the rear fixed steering support to cause the right drive wheel to rotate in the opposite direction for rearward movement. It will be appreciated that in the illustrated embodiment, the steering lever controls are common for both the seated configuration and the standing configuration.

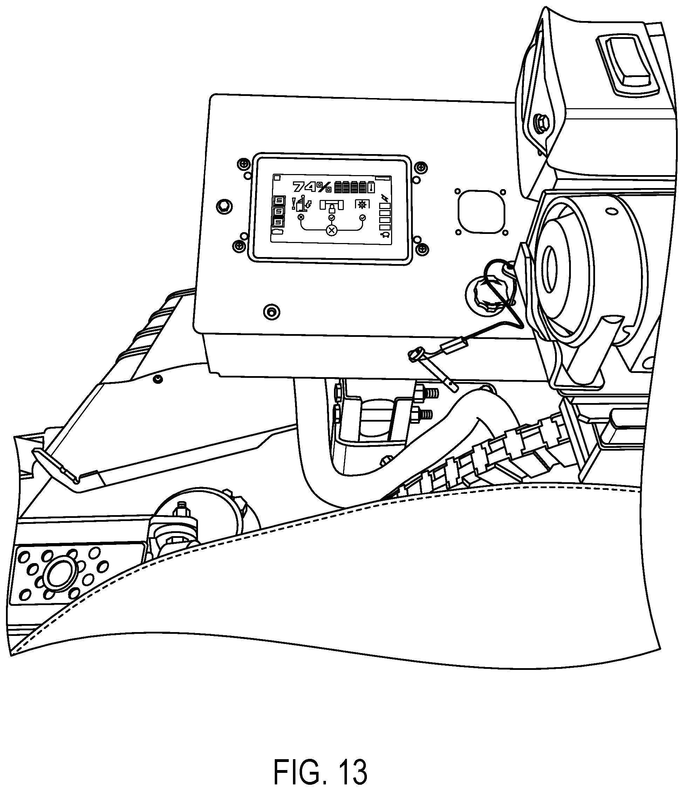

Referring to Figure 13, illustrated is a top view of a display interface that can be employed in mower controls 104 of an example lawn maintenance apparatus according to various aspects discussed herein.

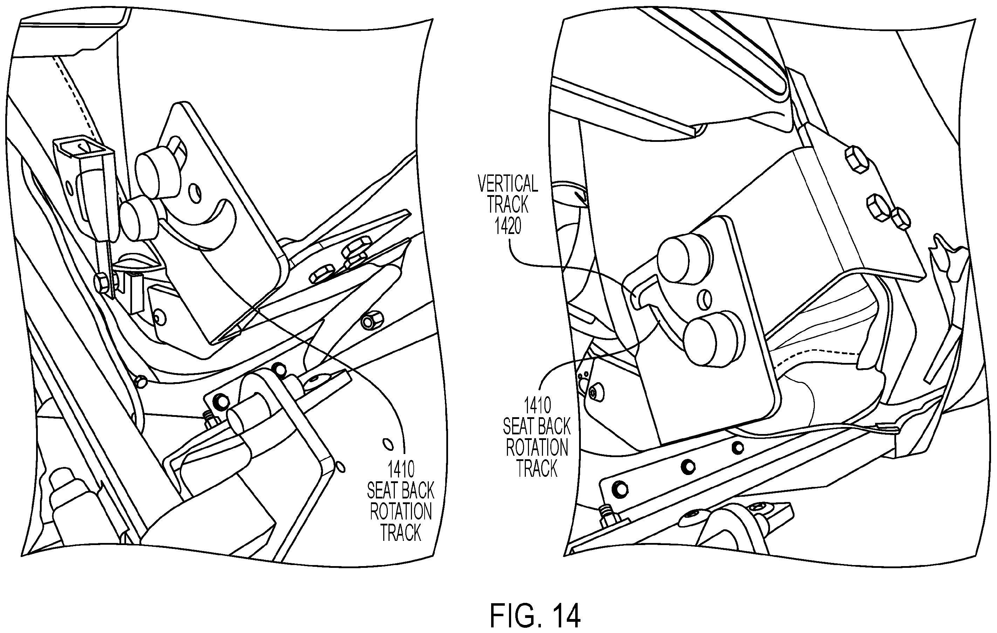

Referring to Figure 14, illustrated are two images of a rotation track 1410 for a seat back 103 in an upright position (left image) and a down position (right image) for an example lawn maintenance according to various aspects discussed herein. As can be seen in Figure 14, seat back rotation track(s) 1410 (e.g., one on each side of seat back 103) comprise a curved track that can allow rotation of seat back 103 between an upright (seated) position and a down (standing) position. Additionally, a short vertical track 1420 can be included, which can prevent accidental rotation of seat back 103 from the seated position. An operator can lift seat back 103 a short distance along vertical track 1420 to align a slotted rod of seat back 103 with the curved portion of seat back rotation track 1410, allowing rotation of seat back 103 from the seated (upright) position to a standing (down) position.

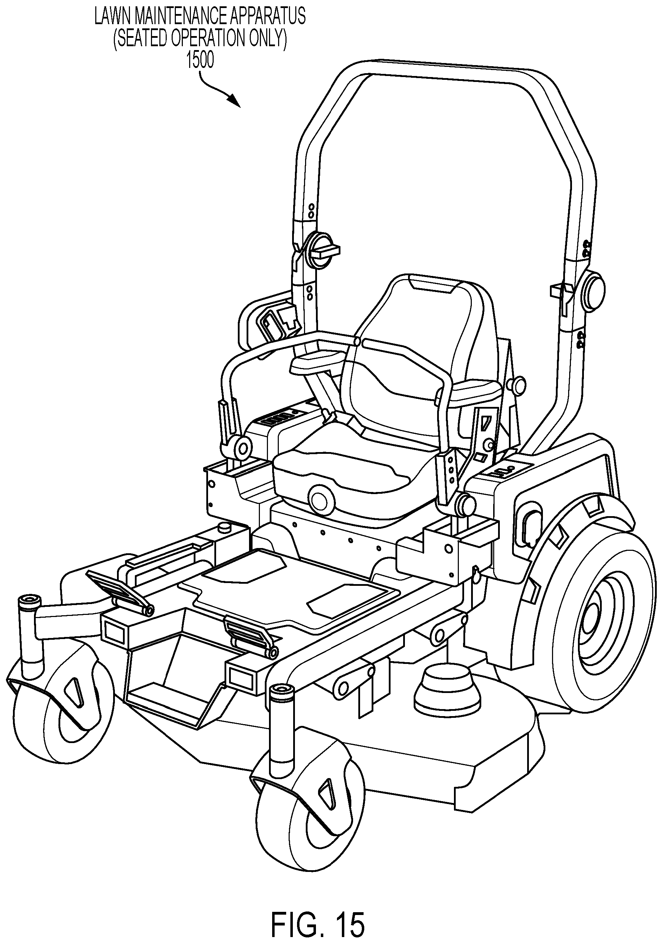

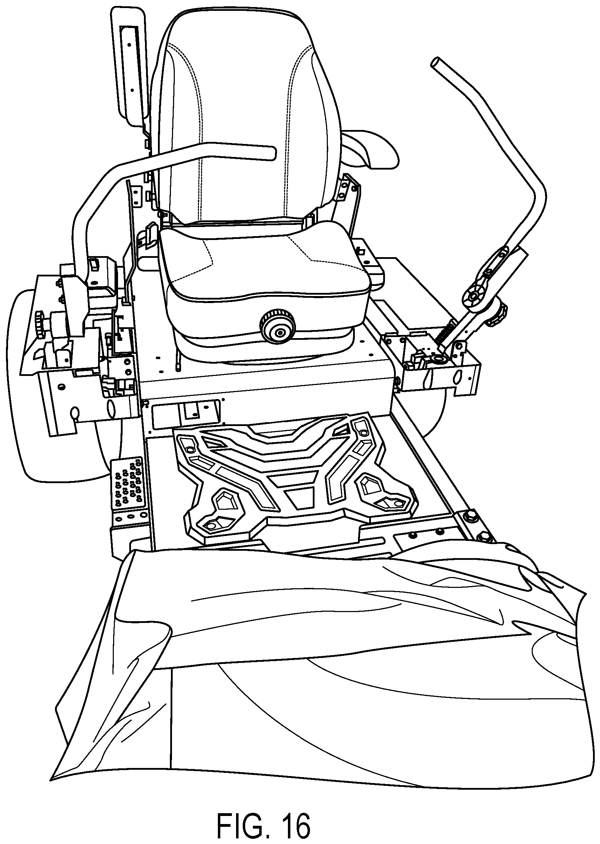

Referring to Figure 15, illustrated is an image of a first example embodiment of a lawn maintenance apparatus 1500 that can employ one or more features discussed herein for seated operation only, according to various aspects discussed herein. Referring to Figure 16, illustrated is an image of a second example embodiment of a lawn maintenance apparatus that can employ one or more features discussed herein for seated operation only, according to various aspects discussed herein.

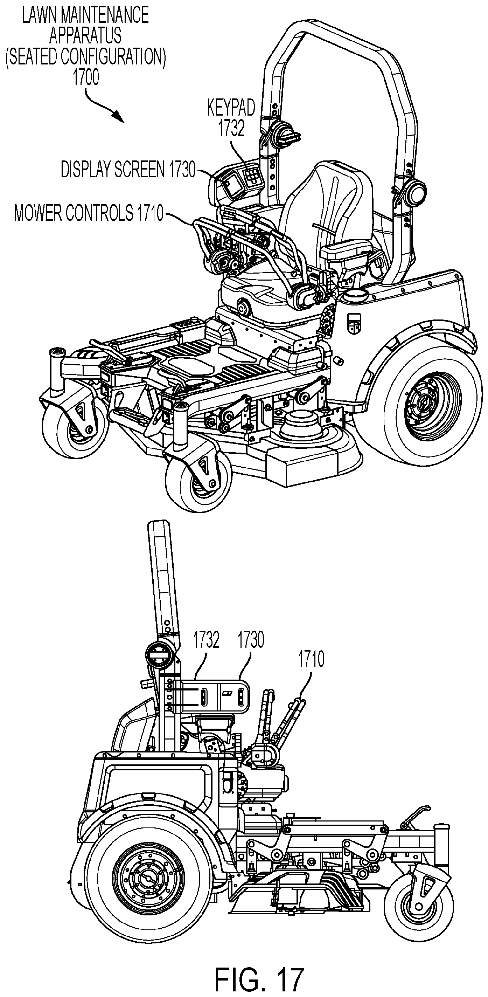

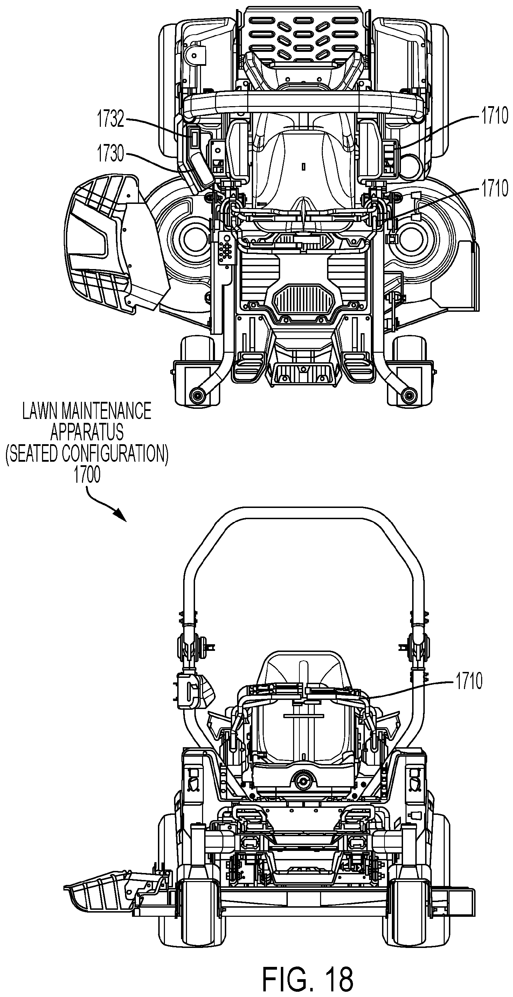

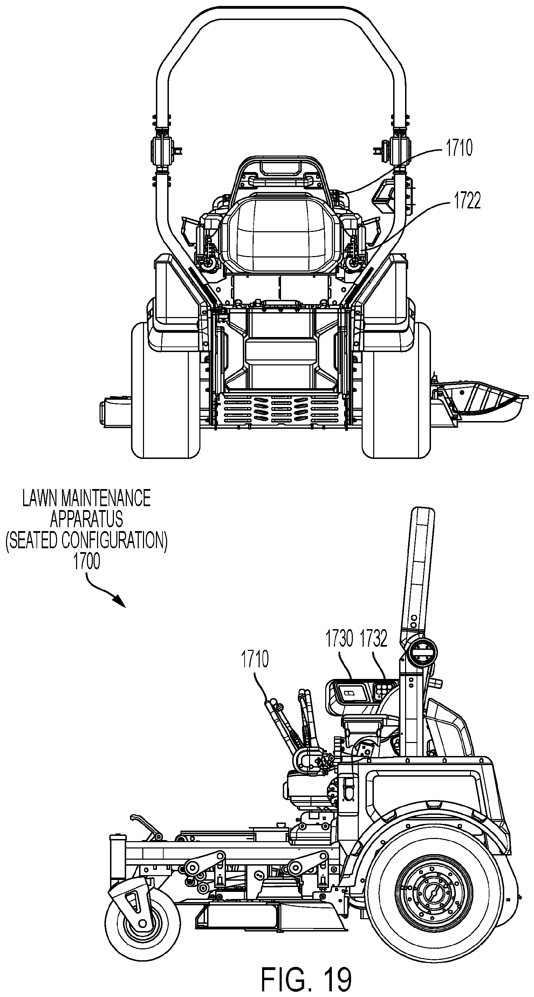

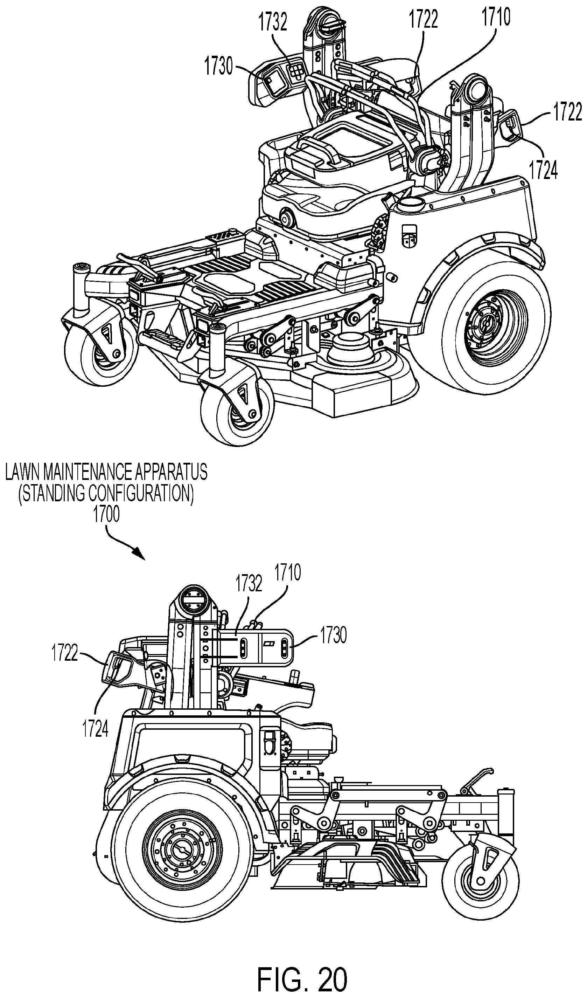

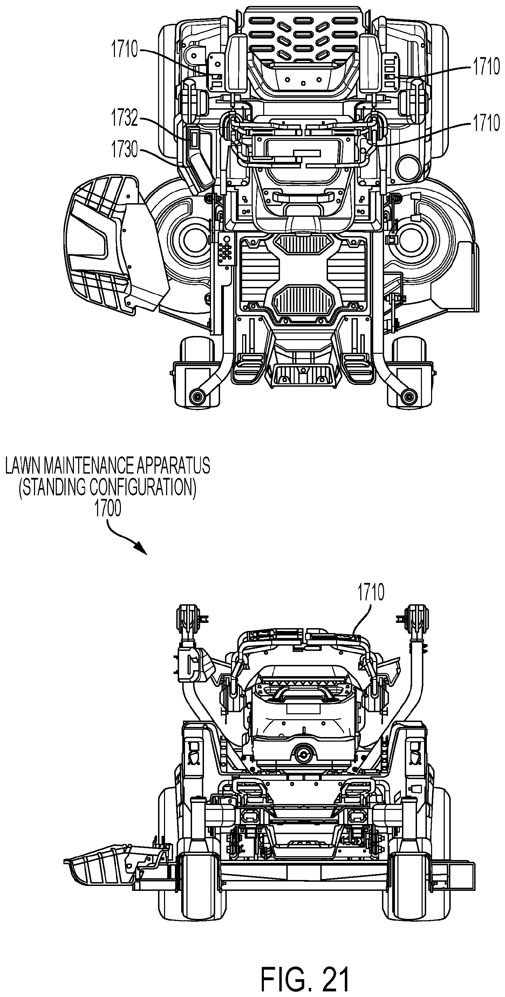

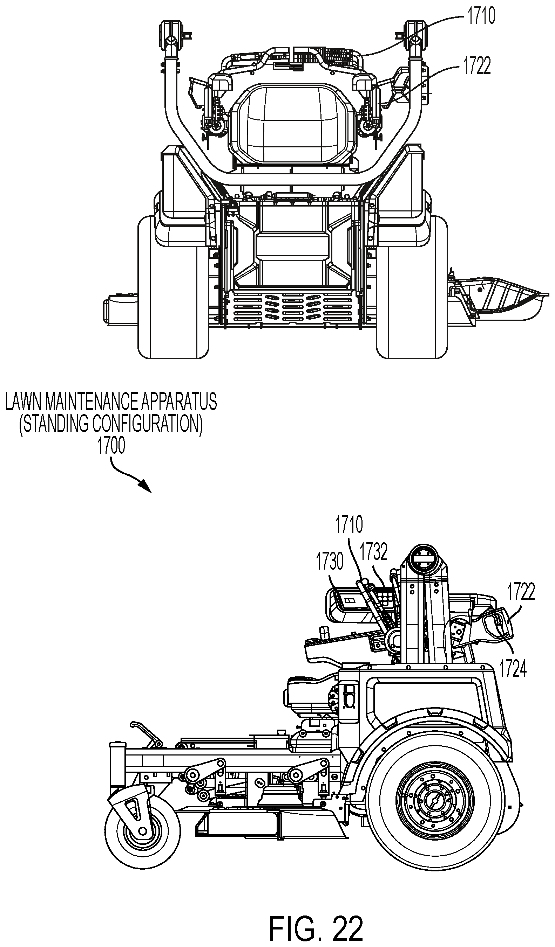

Figures 17-22 illustrate line images of a third example embodiment of a lawn maintenance apparatus 1700 in a seated configuration (Figures 17-19) and a standing configuration (Figures 20-22). Figure 17 illustrates left perspective (top) and right (bottom) views of the third example embodiment 1700 in the seated configuration, according to various aspects discussed herein. Figure 18 illustrates top (top) and front (bottom) views of the third example embodiment 1700 in the seated configuration, according to various aspects discussed herein. Figure 19 illustrates rear (top) and left (bottom) views of the third example embodiment 1700 in the seated configuration, according to various aspects discussed herein. Figure 20 illustrates left perspective (top) and right (bottom) views of the third example embodiment 1700 in the standing configuration, according to various aspects discussed herein. Figure 21 illustrates top (top) and front (bottom) views of the third example embodiment 1700 in the standing configuration, according to various aspects discussed herein. Figure 22 illustrates rear (top) and left (bottom) views of the third example embodiment 1700 in the standing configuration, according to various aspects discussed herein.

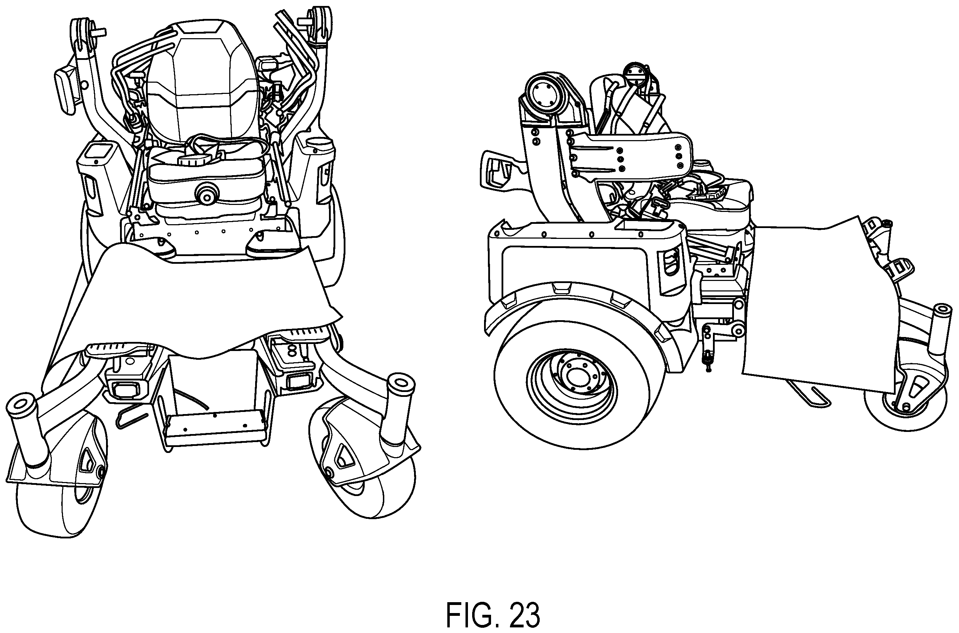

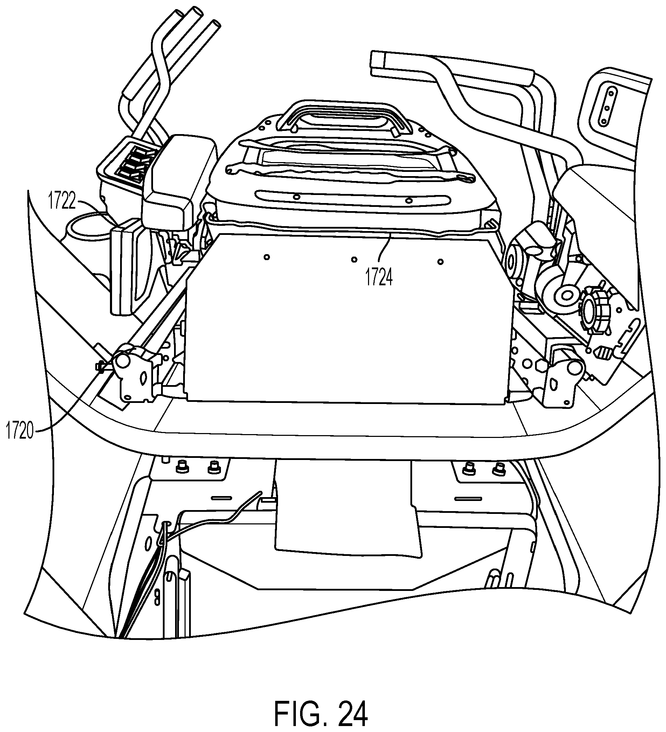

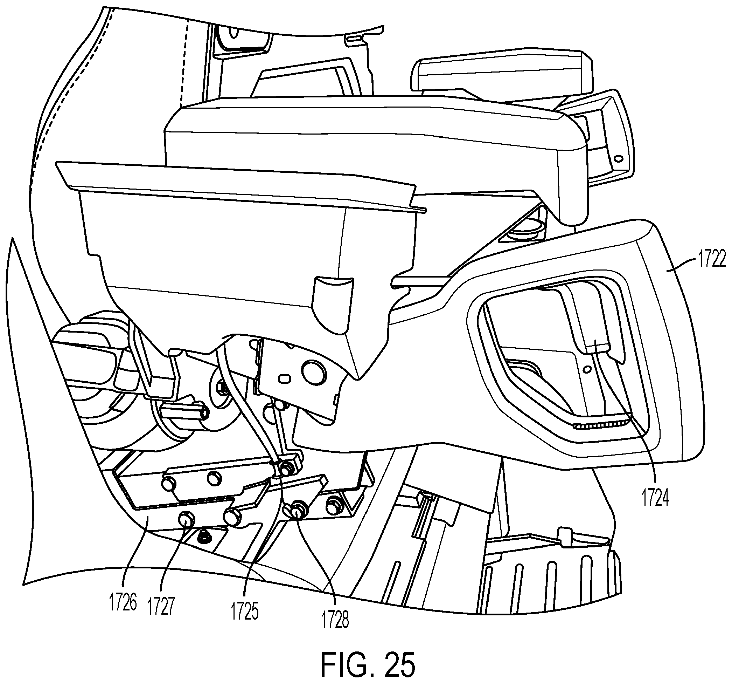

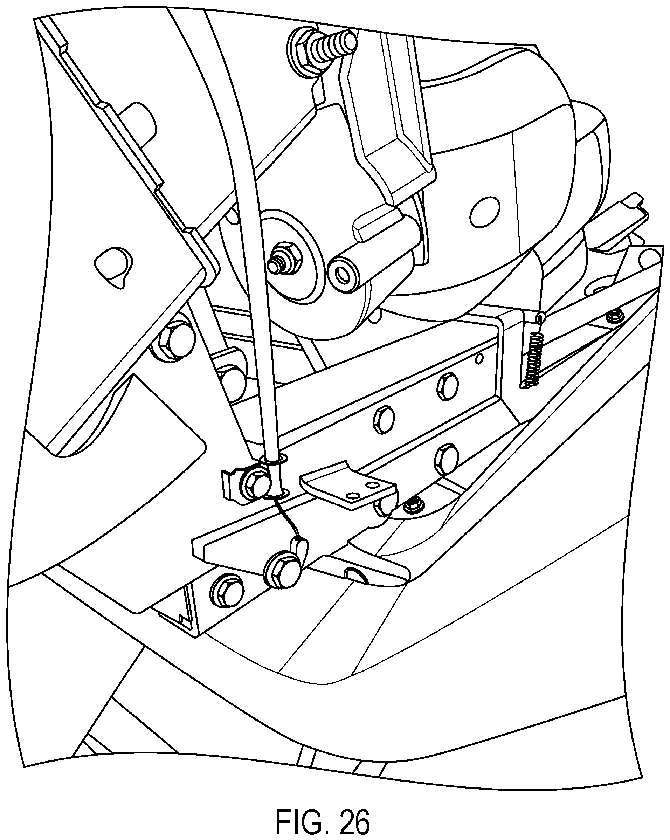

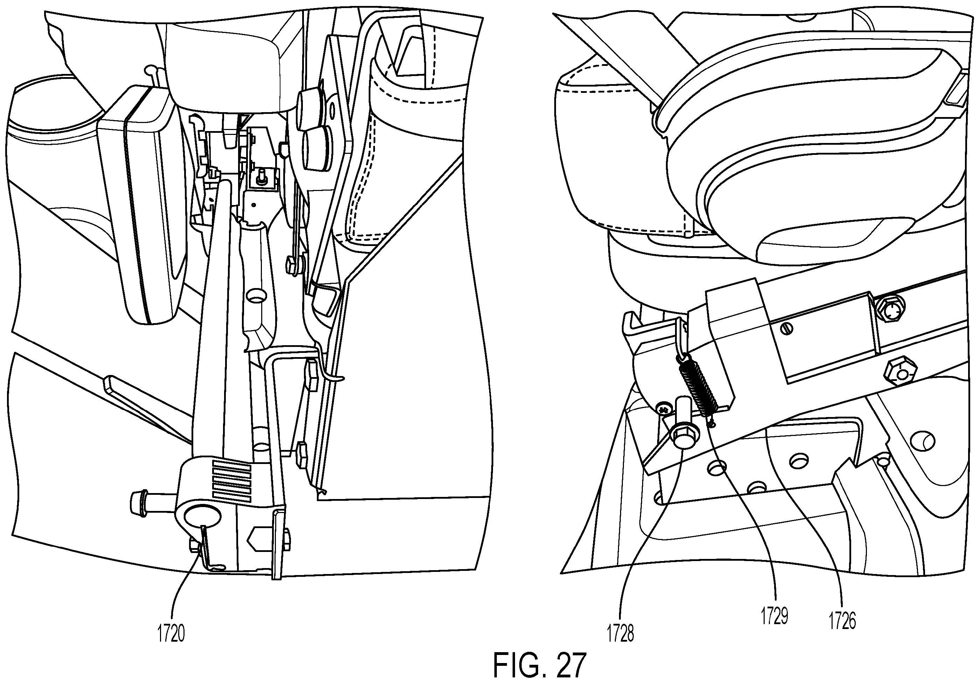

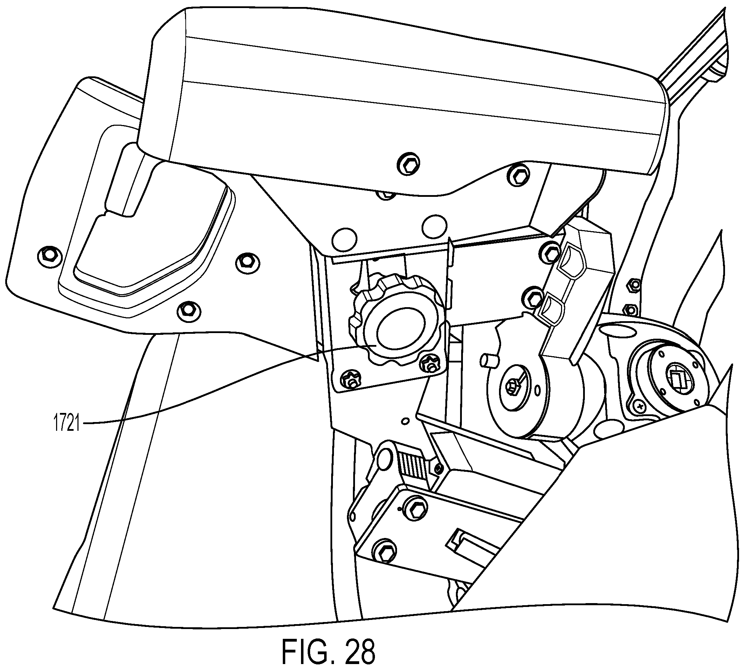

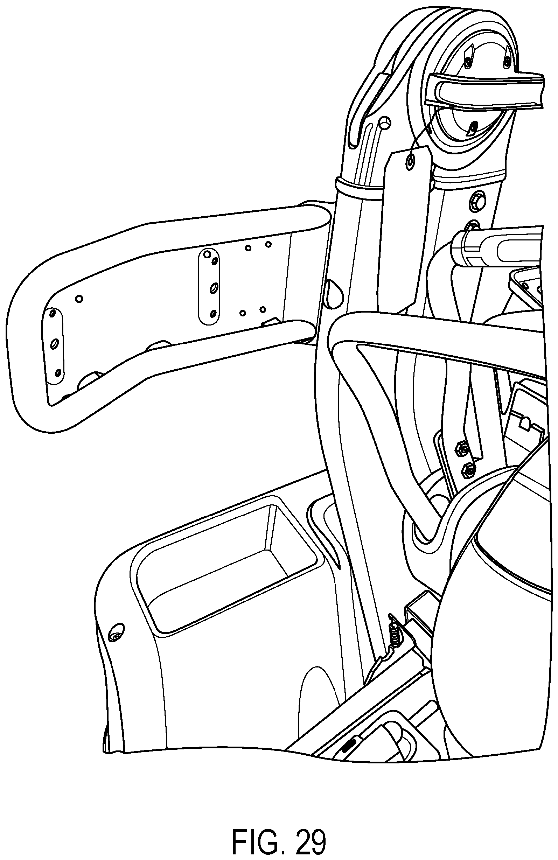

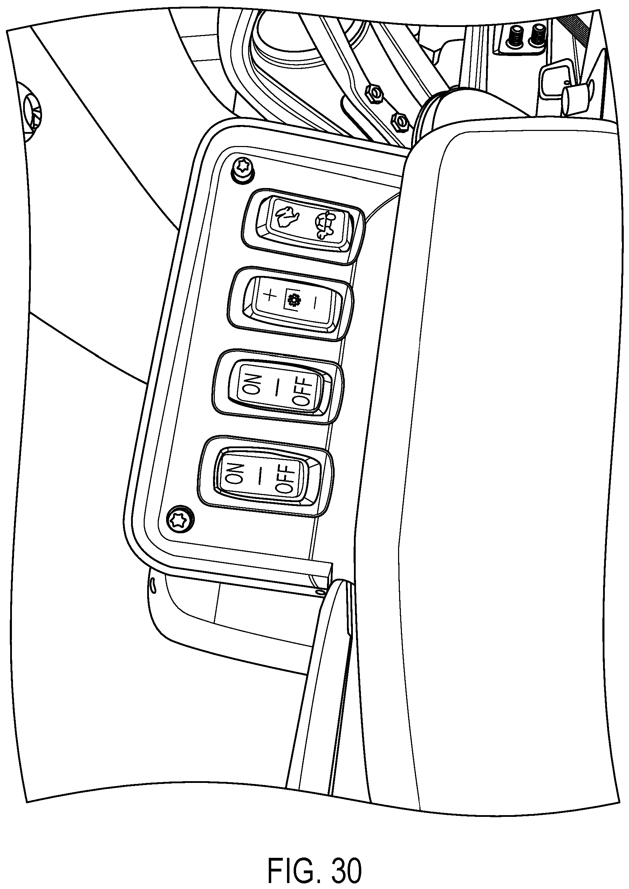

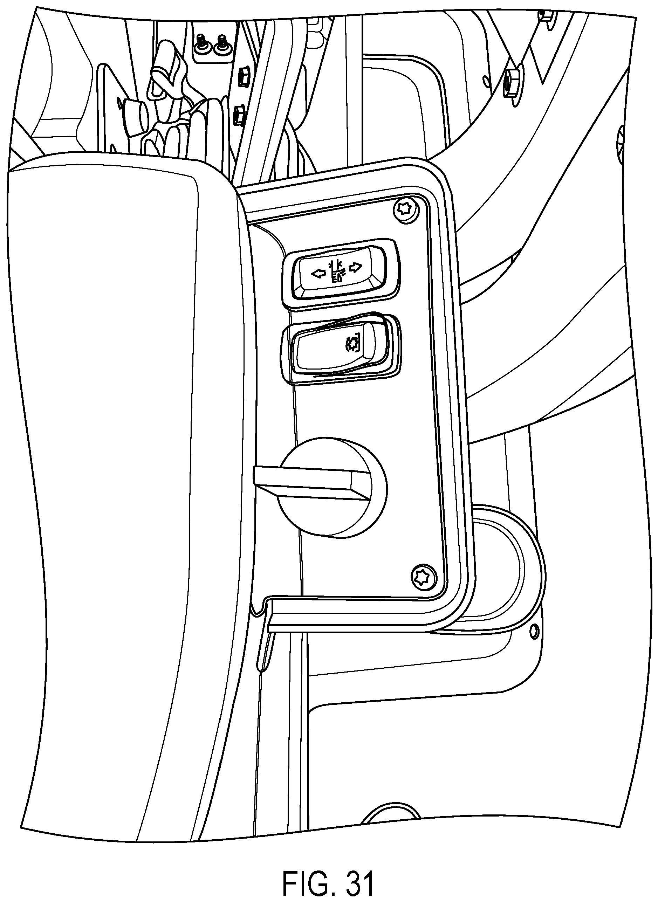

Figures 23-31 illustrate drawings of a prototype of embodiment 1700. Figure 23 illustrates front (left image) and right (right image) views of the prototype of embodiment 1700, in connection with various aspects discussed herein. Figure 24 illustrates a rear view of the prototype of embodiment 1700, showing the left controls 1710 in a forward (seated) position and the right controls 1710 in a rearward (standing) position, in connection with various aspects discussed herein. Figure 25 illustrates a drawing showing components associated with handles 1722 for adjusting controls 1710, in connection with various aspects discussed herein. Figure 26 illustrates a view of a cable 1725 (e.g., a Bowden cable, etc.) and latch of a bar 1726 engaged with a shoulder bolt 1728 for securing the controls 1710 of embodiment 1700 in a standing position, in connection with various aspects discussed herein. Figure 27 shows two images of the system for moving controls 1710, in connection with various aspects discussed herein. Figure 28 shows a knob 1721 that can be used to lock associated controls 1710 in position, in connection with various aspects discussed herein. Figure 29 illustrates a mount attached to a ROP bar for a display 1730 and associated keypad 1732, in connection with various aspects discussed herein. Figure 30 illustrates armrest mounted controls 1710 for controlling various functions of embodiment 1700 including an operating mode, in connection with various aspects discussed herein. Figure 31 illustrates additional armrest mounted controls 1710 for controlling various functions of embodiment 1700 including a deck height adjustment, in connection with various aspects discussed herein.

Embodiment 1700 can be similar to other lawn maintenance apparatuses discussed herein, with exceptions and/or additions as discussed below. Embodiment 1700 comprises mower controls 1710 (e.g., comprising lap bars, armrest mounted controls, etc.) that can be moved along control mounts 1720 via depressing triggers 1724 on handles 1722 and pushing or pulling the controls 1710 to the seated (forward) or standing (rearward) position where control mount 1720 can be again locked into position.

The control adjustment mechanism includes a user handle or grip 1722 along with a trigger or actuator 1724 for adjusting the controls 1710 between standing mode operation in a rearward position and sitting mode operation in a forward position.

The left and right controls 1710 are independently movable along a rail system that is angled downward from the rear of the machine to the front of the machine. The rail system includes two stop positions - one for the sitting mode of operation and one for the standing mode of operation. In the illustrated embodiment, the system includes shoulder bolts at each position.

The actuator/trigger 1724 is operatively coupled to a pivoting latch on bar 1726 through a cable 1725 (in other embodiments, any of a variety of other techniques for coupling actuator/trigger 1724 to bar 1726 can be employed, such as mechanical techniques linking them via rigid and/or flexible components (e.g., bars, springs, etc.), pneumatic and/or hydraulic techniques, electrical techniques, etc.). When the controls 1710 are in the rearward position, engagement of the actuator/trigger 1710 rotates bar 1726 to pull the upper/rear latch upward to disengage it from the rearward shoulder bolt 1728. The controls 1710 can then move forward and downward until a lower/forward latch of bar 1726 reaches and engages the lower shoulder bolt 1728 at the front of the rail system.

Depressing trigger 1724 on either handle 1722 causes the associated cable 1725 to pull upward on a rear portion of bar 1726, causing it to rotate around pivot point 1727 and disengage an associated latch from either an upper (for the standing position) or lower (for the seated position) shoulder bolt 1728 (See Figure 25) for movement between the seated and standing positions of control mount 1720. Once moved away from that shoulder bolt 1728, controls 1710 can be moved freely to be locked in either the upper (standing) or lower (seated) position via engagement of an associated latch (e.g., upper/rearward or lower/forward) of bar 1726 with an associated shoulder bolt (e.g., upper/rearward or lower/forward) 1728. A spring 1729 (see Figure 27) can bias the bar 1726 toward a locked position when either shoulder bolt 1728 is engaged with an associated latch of bar 1726. An angled portion near each latch can allow bar 1726 to slide along shoulder bolts 1728 to engage at associated latches without depressing trigger 1724.

Additionally, in embodiment 1700 display screen 1730 and keypad 1732 can be mounted from the ROP bar 110, allowing access in both the seated and standing modes of operation (see the mount at Figure 29).

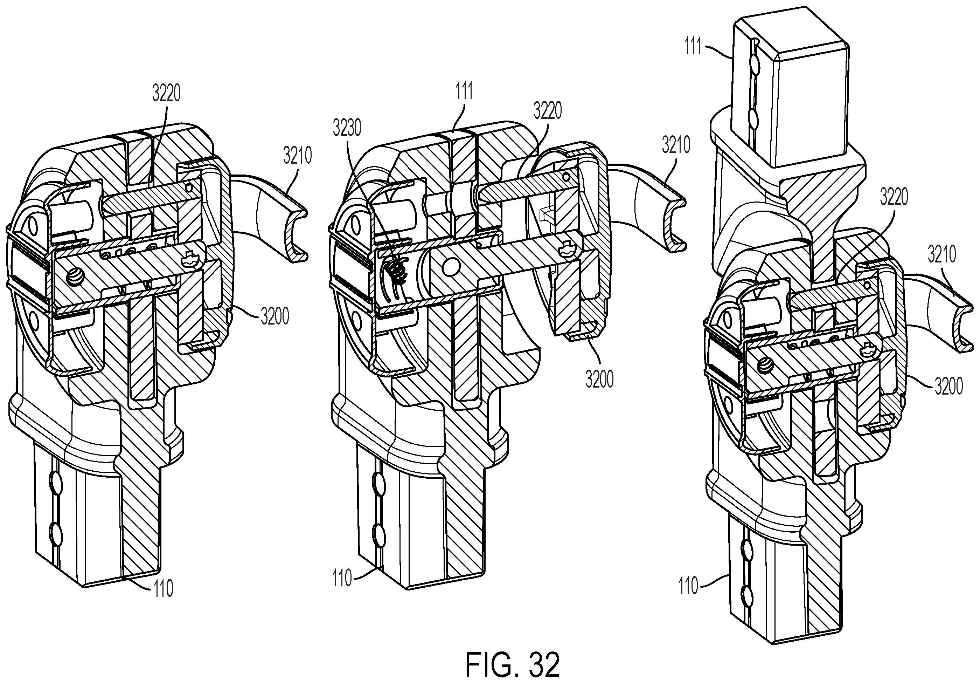

Referring to Figure 32, illustrated are three cutaway images showing operation of a ROP lock/release 3200 useable in connection with various embodiments (e.g., as ROP lock/release 113, etc.), according to various aspects discussed herein. In the left image of Figure 32, lock/release 3200 is engaged and ROP bar 110 is locked in a lower position (e.g., for standing operation, etc.). If handle 3210 is pulled away from ROP bar 110, pin 3220 can disengage from a movable portion 111 of ROP bar 110, allowing portion 111 to be rotated by an operator, as shown in the center image of Figure 32. Portion 111 can have two openings, one to align with pin 3220 to lock portion 111 in a lower position (left image of Figure 32) and one to align with pin 3220 to lock portion 111 in an upper position (right image of Figure 32). Spring 3230 can ensure that handle 3210 remains pulled away from ROP bar 110 until portion 111 is moved to the upper or lower position.

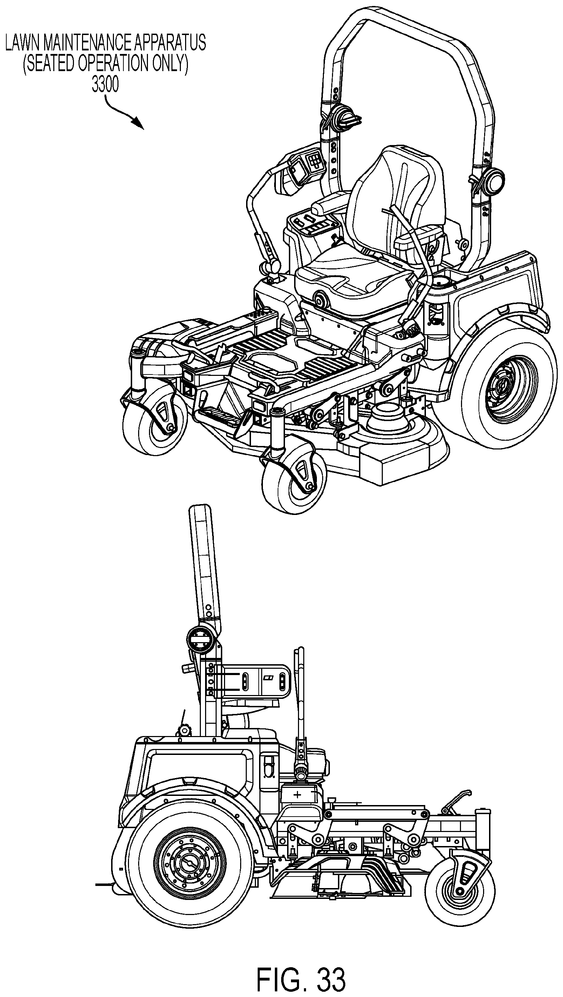

Figures 33-35 illustrate line images of a fourth example embodiment of a lawn maintenance apparatus 3300 configured for operation in a seated configuration.

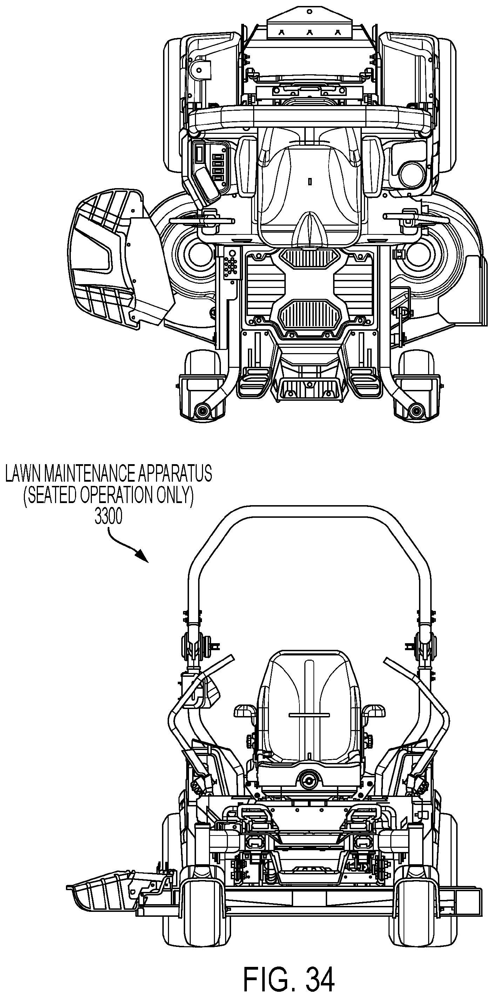

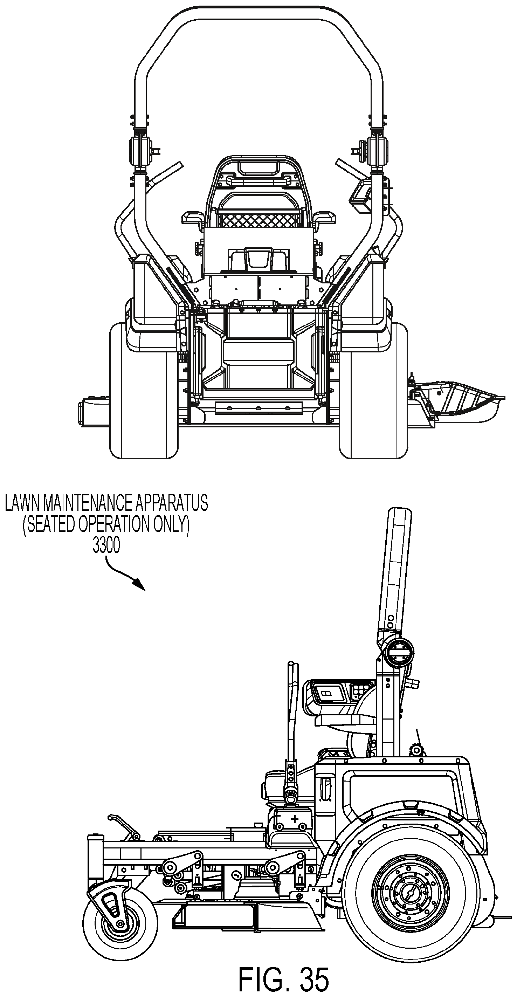

Figure 33 illustrates left perspective (top) and right (bottom) views of the fourth example embodiment 3300, according to various aspects discussed herein. Figure 34 illustrates top (top) and front (bottom) views of the fourth example embodiment 3400, according to various aspects discussed herein. Figure 35 illustrates rear (top) and left (bottom) views of the fourth example embodiment 3500 in the seated configuration, according to various aspects discussed herein.

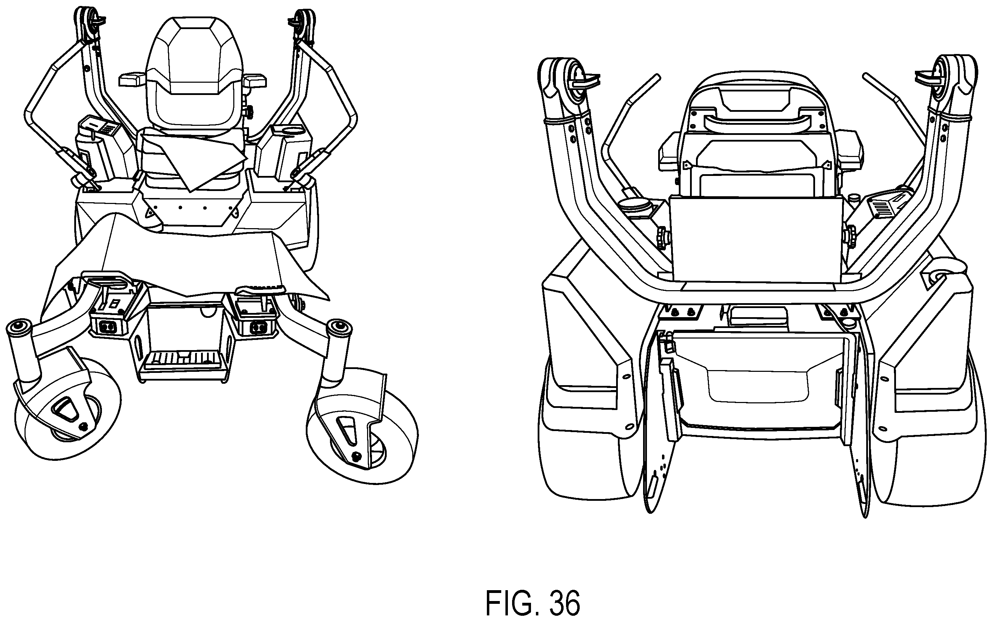

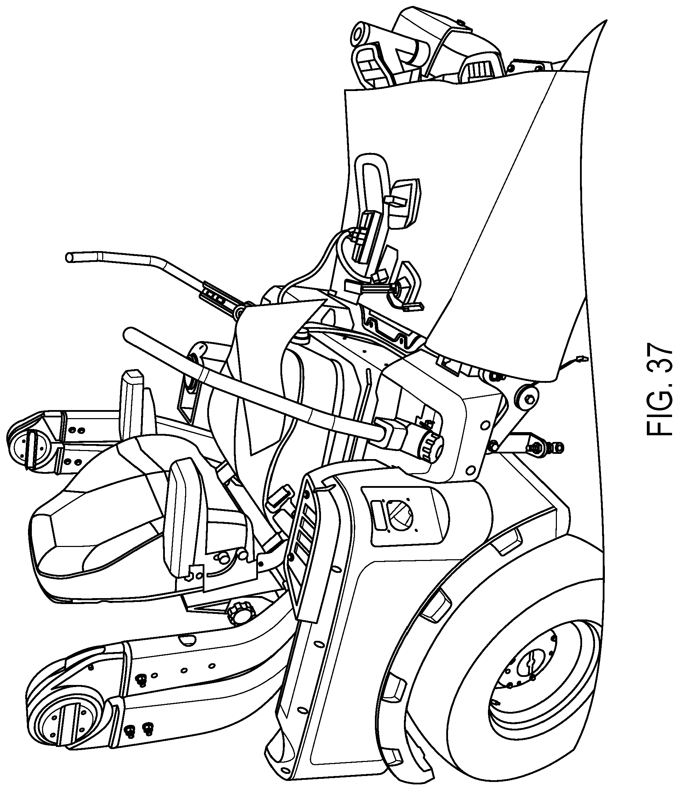

Figures 36-37 illustrate drawings of a prototype of embodiment 3300. Figure 36 illustrates front (left image) and rear (right image) drawings of the prototype of embodiment 3300, in connection with various embodiments discussed herein. Figure 37 illustrates a right perspective view of the prototype of embodiment 3300, in connection with various embodiments discussed herein.

Although various example embodiments discussed herein show lap bars employed for mower controls 104, in various embodiments, outdoor power equipment discussed herein can employ any of a variety of controls and control configurations (e.g., for acceleration, steering, etc.). In various embodiments, any of the following control types can be employed, individually or in any combination: lap bar(s) (e.g., of standard size for a standing mower, or of smaller size, etc.), single or dual boat-style throttle control(s), steering wheel(s), joystick(s) (single axis or dual axis, wherein dual axis joystick(s) can provide acceleration and manual steering, optionally with an ability to trigger a zero-turn to the left or right by pushing the joystick all the way to the left or right, respectively, etc.), throttle(s) (e.g., including twist grip motorcycle-style throttle(s), etc.), finger and/or thumb control(s) (e.g., including multi-function thumb button(s), thumb throttle(s), finger and/or thumb control(s) on any other control type, etc.), standing control(s) that a user can control by shifting their weight (e.g., hoverboard-style control(s), etc.), a steering yoke such as in an airplane (e.g., but with forward/backward controlling speed instead of pitch, etc.), skid steer style joystick or lever controls, etc. Depending on the embodiment, controls can be on a single control arm or dual control arms. In embodiments with two control arms, they can optionally be larger, like standard size lap bars, smaller, telescoping or otherwise adjustable in size. Additionally, dual control arm embodiments can optionally have controls close enough or adjustable to become close enough together for one-handed operator control of both control arms. Additionally, control arm(s) can be adjustable such that the arm and/or optional armrest thereof can swing inward, outward, upward, and/or downward for adjustment and/or to facilitate ease of operator ingress/egress. The control arm(s) can be mounted to a frame of the outdoor power equipment and optionally rotatable and/or repositionable, or can be mounted to one or more rails, etc., that are attached to the frame, such that the control arms can slide along the rail(s), etc., for adjustment and/or between positions for seated and standing modes.

In some embodiments, the controls can be fixed to the outdoor power equipment, but in other embodiments, controls can be detachable, with optionally two or more potential controls that can be attached. In such embodiments, quick connect connectors can be used so that an operator can readily replace controls.

Independent of the specific controls that are employed, various embodiments can optionally allow for tilting or position of controls for ideal positioning for a given user (e.g., allowing for change in angle, movement up or down, movement forward or backward, movement left or right, including (when there are two or more controls) the ability to position controls together or apart, centered or off to either side, etc.). In embodiments comprising an optional display interface, the display can be movable with the controls (e.g., between standing and seated positions and/or additional adjustment within the seated and/or standing positions, etc.) and/or can be connected to some other component that moves between different positions for seated and standing operation (e.g., ROP bar 110, etc.) such that it can be separately positioned for access during both seated and standing operation. Optionally, control positioning can be saved or remembered by the outdoor power equipment, for example, saving one or more control positions for each operator (e.g., one or more seated and/or standing positions for the operator(s), etc.), saving one or more control positions for each of the seated and/or standing positions, etc.

Additionally, deck engagement controls for the lawn maintenance apparatus optionally can move with the other controls, and deck engagement controls can employ any of a variety of control means discussed herein (e.g., mechanical, electromechanical, pneumatic, hydraulic, etc.).

Various embodiments can additionally comprise additional features related to driving and/or cutting functionality. As one example, different settings can be provided to control the maximum speed of the lawn maintenance apparatus via an electrical and/or mechanical control such as a rocker switch, which can provide a user with control over top speed without the need to navigate through menus of an interactive display (e.g., see Figures 30-31, for example, the top switch in Figure 30). Additionally or alternatively, various embodiments can comprise an electrical and/or mechanical control (e.g., a switch, etc.) to select between two or more adjustable cutting modes, which can adjust the power provided the motors spinning the cutting blades (e.g., see Figures 30-31).

In regard to the various functions performed by the above described components, machines, devices, processes and the like, the terms (including a reference to a "means") used to describe such components are intended to correspond, unless otherwise indicated, to any component which performs the specified function of the described component (e.g., a functional equivalent), even though not structurally equivalent to the disclosed structure, which performs the function in the herein illustrated exemplary aspects of the embodiments. In this regard, it will also be recognized that the embodiments include a system as well as electronic hardware configured to implement the functions, or a computer-readable medium having computer-executable instructions for performing the acts or events of the various processes.

In addition, while a particular feature may have been disclosed with respect to only one of several implementations, such feature may be combined with one or more other features of the other implementations as may be desired and advantageous for any given or particular application. Furthermore, to the extent that the terms "includes," and "including" and variants thereof are used in either the detailed description or the claims, these terms are intended to be inclusive in a manner similar to the term "comprising."

As used in this application, the term "or" is intended to mean an inclusive "or" rather than an exclusive "or". That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more" unless specified otherwise or clear from context to be directed to a singular form.

In other embodiments, combinations or sub-combinations of the above disclosed embodiments can be advantageously made. Moreover, embodiments described in a particular drawing or group of drawings should not be limited to those illustrations. Rather, any suitable combination or subset of elements from one drawing(s) can be applied to other embodiments in other drawings where suitable to one of ordinary skill in the art to accomplish objectives disclosed herein, known in the art, or reasonably conveyed to one of ordinary skill in the art by way of the context provided in this specification. Where utilized, block diagrams of the disclosed embodiments or flow charts are grouped for ease of understanding. However, it should be understood that combinations of blocks, additions of new blocks, re-arrangement of blocks, and the like are contemplated in alternative embodiments of the present disclosure.

The following examples pertain to further embodiments.

Example 1 is an outdoor power equipment, comprising: a frame; a plurality of drive wheels rotatable about a drive wheel rotation axis; a rollover protection (ROP) bar secured to the frame; an operator seat secured to the frame; drive controls for operator-initiated drive and steering functions of the outdoor power equipment; and a standing platform positioned at least in part rearward of the operator seat; wherein a portion of the ROP bar is movable between a sitting configuration and a standing configuration of the outdoor power equipment, and wherein the ROP bar comprises at least one ROP lock/release configured to alternately be in a locked configuration that prevents movement of the portion of the ROP bar and an unlocked configuration that allows movement of the portion of the ROP bar.

Example 2 comprises the subject matter of any variation of example(s) 1, wherein the at least one ROP lock/release can be pulled to switch from the locked configuration to the unlocked configuration.

Example 3 comprises the subject matter of any variation of example(s) 2, wherein the portion of the ROP bar comprises two openings associated with a first ROP lock/release of the at least one ROP lock/release, wherein the first ROP lock/release comprises a first pin, wherein the first pin is configured to align with a first opening of the two openings to lock the portion in the sitting configuration, and wherein the first pin is configured to align with a second opening of the two openings to lock the portion in the standing configuration.

Example 4 comprises the subject matter of any variation of example(s) 1-3, wherein when the at least one ROP lock/release is in an unlocked position, the at least one ROP lock/release comprises a spring configured to keep the at least one ROP lock/release in the unlocked position until the ROP bar is moved out of a first configuration and into a second configuration, wherein the first position is one of the sitting configuration or the standing configuration, and wherein the second position is one of the sitting configuration or the standing configuration.

Example 5 comprises the subject matter of any variation of example(s) 1-4, further comprising additional operator controls, wherein the additional operator controls are attached to the ROP bar and are configured to be accessible to both an operator when seated on the operator seat and the operator when standing on the standing platform.

Example 6 comprises the subject matter of any variation of example(s) 5, wherein the additional operator controls are attached to the ROP bar via an additional portion of the ROP bar, wherein the additional portion of the ROP bar has a fixed position relative to the frame.

Example 7 is an outdoor power equipment, comprising: a frame; a plurality of drive wheels rotatable about a drive wheel rotation axis; a rollover protection (ROP) bar secured to the frame; an operator seat secured to the frame; drive controls for operator-initiated drive and steering functions of the outdoor power equipment; and a standing platform positioned at least in part rearward of the operator seat, wherein the drive controls comprise left drive controls and right drive controls, wherein the left drive controls and the right drive controls are both movable between an associated sitting configuration and an associated standing configuration of the outdoor power equipment.

Example 8 comprises the subject matter of any variation of example(s) 7, wherein the left drive controls are configured to move between a left sitting configuration and a left standing configuration by sliding along a left rail, and wherein the right drive controls are configured to move between a right sitting configuration and a right standing configuration by sliding along a right rail.

Example 9 comprises the subject matter of any variation of example(s) 8, wherein the left drive controls are configured to alternately be locked in the left sitting configuration and the left standing configuration, and wherein the right drive controls are configured to alternately be locked in the right sitting configuration and the right standing configuration.

Example 10 comprises the subject matter of any variation of example(s) 9, further comprising a left handle associated with the left drive controls and a right handle associated with the right drive controls, wherein the left handle comprises a left trigger and the right handle comprises a right trigger, wherein depressing the left trigger is configured to unlock the left drive controls alternately from the left sitting configuration and the left standing configuration, and wherein depressing the right trigger is configured to unlock the right drive controls alternately from the right sitting configuration and the right standing configuration.

Example 11 comprises the subject matter of any variation of example(s) 10, wherein depressing the left trigger rotates a left bar to unlock the left drive controls, and wherein depressing the right trigger rotates a right bar to unlock the right drive controls.

Example 12 comprises the subject matter of any variation of example(s) 11, wherein the left trigger is coupled to the left bar via a left cable, wherein the right trigger is coupled to the right bar via the right cable, wherein depressing the left right rotates the left bar via movement of the left cable, and wherein depressing the right trigger rotates the right bar via movement of the right cable.

Example 13 comprises the subject matter of any variation of example(s) 9-12, wherein the left drive controls are configured to be locked in the left sitting configuration via engagement with a first left shoulder bolt, wherein the left drive controls are configured to be locked in the left standing configuration via engagement with a second left shoulder bolt, wherein the right drive controls are configured to be locked in the right sitting configuration via engagement with a first right shoulder bolt, and wherein the right drive controls are configured to be locked in the right standing configuration via engagement with a second right shoulder bolt.

Example 14 is an outdoor power equipment, comprising: a frame; a plurality of drive wheels rotatable about a drive wheel rotation axis; a rollover protection (ROP) bar secured to the frame, wherein a portion of the ROP bar is movable between a ROP sitting configuration and a ROP standing configuration; an operator seat secured to the frame; drive controls for operator-initiated drive and steering functions of the outdoor power equipment; and a standing platform positioned at least in part rearward of the operator seat, wherein the drive controls are movable between a controls sitting configuration and a controls standing configuration.

Example 15 comprises the subject matter of any variation of example(s) 14, wherein the ROP bar comprises at least one ROP lock/release configured to alternately be in a locked configuration that prevents movement of the portion of the ROP bar and an unlocked configuration that allows movement of the portion of the ROP bar.

Example 16 comprises the subject matter of any variation of example(s) 15, wherein the ROP bar comprises an inner surface and an outer surface, wherein the inner surface is closer to a center of the outdoor power equipment than the outer surface, and wherein the at least one ROP lock/release is located on the inner surface of the ROP bar.

Example 17 comprises the subject matter of any variation of example(s) 14-16, wherein the at least one ROP lock/release is configured to remain in the unlocked configuration when the portion of the ROP bar is between the ROP sitting configuration and the ROP standing configuration.

Example 18 comprises the subject matter of any variation of example(s) 14-17, wherein the drive controls comprise left drive controls and right drive controls, wherein the left drive controls are movable between a left sitting configuration and a left standing configuration, wherein the right drive controls are movable between a right sitting configuration and a right standing configuration, wherein the drive controls are in the controls sitting configuration when the left drive controls are in the left sitting configuration and the right drive controls are in the right sitting configuration, and wherein the drive controls are in the controls standing configuration when the left drive controls are in the left standing configuration and the right drive controls are in the right standing configuration.

Example 19 comprises the subject matter of any variation of example(s) 18, wherein the left drive controls are configured to alternately be locked in the left sitting configuration and the left standing configuration, and wherein the right drive controls are configured to alternately be locked in the right sitting configuration and the right standing configuration.

Example 20 comprises the subject matter of any variation of example(s) 19, wherein the left drive controls comprise a left actuator configured to unlock the left drive controls, and wherein the right drive controls comprise a right actuator configured to unlock the left drive controls.

Based on the foregoing, it should be understood that the examples and embodiments described herein are for illustrative purposes only and that various modifications or changes in light thereof will be suggested to persons skilled in the art and are to be included within the scope of the appended claims.

## Claims

1. An outdoor power equipment, comprising:
a frame;
a plurality of drive wheels rotatable about a drive wheel rotation axis;
a rollover protection (ROP) bar secured to the frame;
an operator seat secured to the frame;
drive controls for operator-initiated drive and steering functions of the outdoor power equipment; and
a standing platform positioned at least in part rearward of the operator seat, wherein the drive controls comprise left drive controls and right drive controls, wherein the left drive controls and the right drive controls are both movable between an associated sitting configuration and an associated standing configuration of the outdoor power equipment.

2. The outdoor power equipment of claim 1, wherein the left drive controls are configured to move between a left sitting configuration and a left standing configuration by sliding along a left rail, and wherein the right drive controls are configured to move between a right sitting configuration and a right standing configuration by sliding along a right rail.

3. The outdoor power equipment of claim 2, wherein the left drive controls are configured to alternately be locked in the left sitting configuration and the left standing configuration, and wherein the right drive controls are configured to alternately be locked in the right sitting configuration and the right standing configuration.

4. The outdoor power equipment of claim 3, further comprising a left handle associated with the left drive controls and a right handle associated with the right drive controls, wherein the left handle comprises a left trigger and the right handle comprises a right trigger, wherein depressing the left trigger is configured to unlock the left drive controls alternately from the left sitting configuration and the left standing configuration, and wherein depressing the right trigger is configured to unlock the right drive controls alternately from the right sitting configuration and the right standing configuration.

5. The outdoor power equipment of claim 4, wherein depressing the left trigger rotates a left bar to unlock the left drive controls, and wherein depressing the right trigger rotates a right bar to unlock the right drive controls.

6. The outdoor power equipment of claim 5, wherein the left trigger is coupled to the left bar via a left cable, wherein the right trigger is coupled to the right bar via the right cable, wherein depressing the left right rotates the left bar via movement of the left cable, and wherein depressing the right trigger rotates the right bar via movement of the right cable.

7. The outdoor power equipment of any of claims 3 to 6, wherein the left drive controls are configured to be locked in the left sitting configuration via engagement with a first left shoulder bolt, wherein the left drive controls are configured to be locked in the left standing configuration via engagement with a second left shoulder bolt, wherein the right drive controls are configured to be locked in the right sitting configuration via engagement with a first right shoulder bolt, and wherein the right drive controls are configured to be locked in the right standing configuration via engagement with a second right shoulder bolt.
